# EUROPEAN PATENT APPLICATION

(11) **EP 4 600 514 A1**
(43) Date of publication of application: **13.08.2025**
(21) Application number: 23896813.5
(22) Date of filing: 29.11.2023
(51) Int. Cl.: F16C 11/04, H04M 1/02, F16H 37/12, G06F 1/16, G09F 9/30

(54) **FOLDING ASSEMBLY, FOLDING APPARATUS, AND TERMINAL DEVICE**

(30) Priority: 30.11.2022 CN 202211521017
(71) Applicant: Honor Device Co., Ltd., Shenzhen, Guangdong 518040 (CN)
(72) Inventor: SU, Shuai, Shenzhen, Guangdong 518040 (CN); CHEN, Ruihao, Shenzhen, Guangdong 518040 (CN); DONG, Changfu, Shenzhen, Guangdong 518040 (CN); DONG, Shaohong, Shenzhen, Guangdong 518040 (CN); DAN, Jinqi, Shenzhen, Guangdong 518040 (CN)
(74) Representative: Isarpatent
(86) International application number: PCT/CN2023/134936
(87) International publication number: WO 2024/114669

(57) **Abstract**

Embodiments of this application relate to the field of foldable electronic device technologies, and provide a folding assembly, a folding apparatus, and a terminal device. The folding assembly includes a seat, a first fixing member, a second fixing member, a first main swing arm, a second main swing arm, a first support member, and a second support member. When the folding assembly is switched from an unfolded state to a folded state, the first main swing arm rotates relative to the first fixing member, the first main swing arm and the first support member slide and rotate relative to each other, the second main swing arm rotates relative to the second fixing member, and the second main swing arm and the first support member slide and rotate relative to each other, to enable a first support surface and a second support surface to be arranged opposite to each other and form an angle when the folding assembly is in the folded state. In addition, a distance between an edge of the first support surface and an edge of the second support surface that are close to the seat is greater than a distance between an edge of the first support surface and an edge of the second support surface that are away from the seat. In embodiments of this application, a possibility of damage to the foldable part of the foldable screen caused by an excessively large degree of folding deformation can be greatly reduced.

## Description

This application claims priority to Chinese Patent Application No. 202211521017.2, filed with the China National Intellectual Property Administration on November 30, 2022 and entitled "FOLDING ASSEMBLY, FOLDING APPARATUS, AND TERMINAL DEVICE", which is incorporated herein by reference in its entirety.

### TECHNICAL FIELD

This application relates to the field of foldable electronic device technologies, and in particular, to a folding assembly, a folding apparatus, and a terminal device.

### BACKGROUND

A foldable electronic device is an electronic device that can be folded and unfolded, for example, a foldable screen mobile phone, a foldable screen tablet computer, and a foldable screen notebook computer. A foldable electronic device generally includes a body and a flexible display screen arranged on the body. The body can be folded or unfolded through a folding mechanism thereof. The flexible display screen can be folded or unfolded together with the body by bending a flexibly deformable part of the flexible display screen.

However, during folding and unfolding of the flexible display screen, the flexibly deformable part of the flexible display screen is susceptible to damage since the flexibly deformable part is likely to be affected by a force from the folding mechanism (for example, be pulled or squeezed).

### SUMMARY

Embodiments of this application provide a folding assembly, a folding apparatus, and a terminal device, to alleviate a technical problem in the related art that a flexibly deformable part of a flexible display screen is susceptible to damage caused by a force from a folding mechanism.

To achieve the foregoing objective, the following technical solutions are adopted in embodiments of this application:
According to a first aspect, embodiments of this application provide a folding assembly. The folding assembly includes:
a seat;
a first fixing member and a second fixing member, respectively located on two sides of the seat;
a first main swing arm and a second main swing arm, where the first main swing arm is rotatably connected to the seat and the first fixing member respectively, and the second main swing arm is rotatably connected to the seat and the second fixing member respectively; and
a first support member and a second support member, where the first support member is rotatably connected to the first fixing member, and is slidably and rotatably connected to the first main swing arm, and the first support member includes a first support surface; and the second support member is rotatably connected to the second fixing member, and is slidably and rotatably connected to the second main swing arm, and the second support member includes a second support surface, where
the first fixing member and the second fixing member are relatively rotatable based on the seat, to switch the folding assembly between an unfolded state and a folded state; when the folding assembly is switched from the unfolded state to the folded state, the first fixing member drives the first main swing arm and the first support member to rotate relative to the seat, the first main swing arm rotates relative to the first fixing member, and the first main swing arm and the first support member slide and rotate relative to each other; the second fixing member drives the second main swing arm and the second support member to rotate relative to the seat, the second main swing arm rotates relative to the second fixing member, and the second main swing arm and the first support member slide and rotate relative to each other, to enable the first support surface and the second support surface to be arranged opposite to each other and form an angle when the folding assembly is in the folded state; and a distance between an edge of the first support surface close to the seat and an edge of the second support surface close to the seat is a first distance, a distance between an edge of the first support surface away from the seat and an edge of the second support surface away from the seat is a second distance, and the first distance is greater than the second distance.

The foregoing technical solutions in embodiments of this application have at least the following technical effects or advantages:
In the folding assembly provided in embodiments of this application, because when the first fixing member and the second fixing member rotate relative to each other based on the seat, to switch the folding assembly from the unfolded state to the folded state, the first main swing arm rotates relative to the first fixing member, the first main swing arm and the first support member slide and rotate relative to each other, the second main swing arm rotates relative to the second fixing member, and the second main swing arm and the first support member slide and rotate relative to each other, to enable the first support surface and the second support surface to be arranged opposite to each other and form an angle when the folding assembly is in the folded state. In addition, the first distance between the edges of the first support surface and the second support surface close to the seat is greater than the second distance between the edges thereof away from the seat. Therefore, a space with a side close to the seat larger than a side away from the seat can be formed between the first support surface and the second support surface, and can accommodate a foldable part of the foldable screen, which is conducive to presenting the foldable part substantially in a water drop shape without completely folding the foldable part in half, and can effectively reduce a possibility of damage to the foldable part of the foldable screen due to an excessively large degree of folding deformation.

In addition, because the first main swing arm is slidably and rotatably connected to the first support member, that is, the first support member is driven by the first main swing arm to move, and the second main swing arm is slidably and rotatably connected to the second support member, that is, the second support member is driven by the second main swing arm to move, compared with driving the first support member by the first auxiliary swing arm rotatably connected to the seat and slidably connected to the first fixing member to move and driving the second support member by the second auxiliary swing arm rotatably connected to the seat and slidably connected to the second fixing member to move, it is conducive to reducing relative sliding strokes of the first support member and the first main swing arm, and reducing relative sliding strokes of the second support member and the second main swing arm, thereby helping to improve structural compactness and reduce the size.

In some embodiments of the first aspect, a first sliding portion is arranged on the first support member, and a first sliding fitting portion is arranged on the first main swing arm; one of the first sliding portion and the first sliding fitting portion includes a first track groove, and the other includes a first sliding body; and the first sliding body slidably fits the first track groove, to enable the first main swing arm and the first support member to slide and rotate relative to each other; and
a second sliding portion is arranged on the second support member, and a second sliding fitting portion is arranged on the second main swing arm; one of the second sliding portion and the second sliding fitting portion includes a second track groove, and the other includes a second sliding body; and the second sliding body slidably fits the second track groove, to enable the second main swing arm and the second support member to slide and rotate relative to each other.

In some embodiments of the first aspect, the first track groove includes a first slide groove and a second slide groove, where the second slide groove is located on a side of the first slide groove and is in communication the first slide groove; when the folding assembly is in the unfolded state, the first sliding body is located in the first slide groove; and when the folding assembly is in the folded state, the first sliding body is located in the second slide groove; and

the second track groove includes a third slide groove and a fourth slide groove, where the fourth slide groove is located on a side of the third slide groove and is in communication with the third slide groove; when the folding assembly is in the unfolded state, the second sliding body is located in the third slide groove; and when the folding assembly is in the folded state, the second sliding body is located in the fourth slide groove.

In some embodiments of the first aspect, when the folding assembly is in the unfolded state, the second slide groove is located on a side of the first slide groove facing the seat, and the fourth slide groove is located on a side of the third slide groove facing the seat.

In some embodiments of the first aspect, a length of the first slide groove is greater than a length of the second slide groove; and a length of the third slide groove is greater than a length of the fourth slide groove.

In some embodiments of the first aspect, the first slide groove and the second slide groove form an L shape; and the third slide groove and the fourth slide groove form an L shape.

In some embodiments of the first aspect, the first sliding portion is located on a side of the first support member facing the first main swing arm; the first main swing arm and the first sliding portion are sequentially arranged in a direction of a rotation axis along which the first main swing arm is rotatably connected to the seat; and the first sliding fitting portion is located on a side of the first main swing arm facing the first sliding portion; and
the second sliding portion is located on a side of the second support member facing the second main swing arm; the second main swing arm and the second sliding portion are sequentially arranged in a direction of a rotation axis along which the second main swing arm is rotatably connected to the seat; and the second sliding fitting portion is located on a side of the second main swing arm facing the second sliding portion.

In some embodiments of the first aspect, the first fixing member is provided with a first groove, and the first groove runs through a side of the first fixing member facing the seat; in the direction of the rotation axis along which the first main swing arm is rotatably connected to the seat, the first groove runs through two opposite ends of the first fixing member; and the first support member is at least partially located in the first groove; and
the second fixing member is provided with a second groove, and the second groove runs through a side of the second fixing member facing the seat; in the direction of the rotation axis along which the second main swing arm is rotatably connected to the seat, the second groove runs through two opposite ends of the second fixing member; and the second support member is at least partially located in the second groove.

In some embodiments of the first aspect, the first groove includes a first inner bottom surface, where the first inner bottom surface and the first support member are arranged opposite to each other; and when the folding assembly is in the unfolded state, the first inner bottom surface and the first support surface form an angle, and a first gap is formed between the first inner bottom surface and the first support member; and
the second groove includes a second inner bottom surface, where the second inner bottom surface and the second support member are arranged opposite to each other; and when the folding assembly is in the unfolded state, the second inner bottom surface and the second support surface form an angle, and a second gap is formed between the second inner bottom surface and the second support member.

In some embodiments of the first aspect, the first fixing member includes a third support surface, where the third support surface is located on a side of the first groove facing away from the seat; and when the folding assembly is in the unfolded state, the third support surface is flush with the first support surface and/or the second support surface; and
the second fixing member includes a fourth support surface, where the fourth support surface is located on a side of the second groove facing away from the seat; and when the folding assembly is in the unfolded state, the fourth support surface is flush with the second support surface and/or the first support surface.

In some embodiments of the first aspect, the seat includes a first support portion, where the first support portion is configured to support the first support member when the folding assembly is in the unfolded state; and
the seat includes a second support portion, where the second support portion is configured to support the second support member when the folding assembly is in the unfolded state.

In some embodiments of the first aspect, the seat is provided with a first limiting groove, and when the folding assembly is in the unfolded state, the first support member extends into the first limiting groove; and an inner bottom wall of the first limiting groove includes the first support portion; and
the seat is provided with a second limiting groove, and when the folding assembly is in the unfolded state, the second support member extends into the second limiting groove; and an inner bottom wall of the second limiting groove includes the second support portion.

In some embodiments of the first aspect, the seat includes a fifth support surface, where the fifth support surface is located between the first limiting groove and the second limiting groove; and when the folding assembly is in the unfolded state, the fifth support surface is flush with the first support surface and/or the second support surface.

In some embodiments of the first aspect, the folding assembly further includes a first auxiliary swing arm and a second auxiliary swing arm, where the first auxiliary swing arm is rotatably connected to the seat and slidably connected to the first fixing member; and the second auxiliary swing arm is rotatably connected to the seat and slidably connected to the second fixing member;
the folding assembly further includes a door plate, where when the folding assembly is in the unfolded state, the door plate is located between the first support member and the second support member; and
a first fitting portion and a second fitting portion are arranged on the door plate, a first pushing portion is arranged on the first auxiliary swing arm, and a second pushing portion is arranged on the second auxiliary swing arm; when the folding assembly is switched from the unfolded state to the folded state, the first pushing portion abuts against a first part of the first fitting portion, and the second pushing portion abuts against a second part of the second fitting portion, to push the door plate to move toward the seat; and when the folding assembly is switched from the folded state to the unfolded state, the first pushing portion abuts against a third part of the first fitting portion, and the second pushing portion abuts against a fourth part of the second fitting portion, to push the door plate to move facing away from the seat.

In some embodiments of the first aspect, the first fitting portion and the second fitting portion are located on a side of the door plate facing the seat, where the first fitting portion is provided with a first fitting groove, where an inner wall of the first fitting groove includes the first part and the third part; and the second fitting portion is provided with a second fitting groove, where an inner wall of the second fitting groove includes the second part and the fourth part;
the first auxiliary swing arm is located on a side of the first fitting portion, projections of the first auxiliary swing arm and the first fitting portion along a direction of the rotation axis of the first auxiliary swing arm at least partially overlap, and the first pushing portion is located on a side of the first auxiliary swing arm facing the first fitting portion; and the first pushing portion deviates from a rotation axis of the first auxiliary swing arm, and is located in the first fitting groove; and
the second auxiliary swing arm is located on a side of the second fitting portion, projections of the second auxiliary swing arm and the second fitting portion along a direction of the rotation axis of the second auxiliary swing arm at least partially overlap, and the second pushing portion is located on a side of the second auxiliary swing arm facing the second fitting portion; and the second pushing portion deviates from a rotation axis of the second auxiliary swing arm, and is located in the second fitting groove.

In some embodiments of the first aspect, the folding assembly further includes a third support member and a fourth support member, where the third support member is arranged on the first main swing arm, and the third support member includes a sixth support surface; and the fourth support member is arranged on the second main swing arm, and the fourth support member includes a seventh support surface; and
when the folding assembly is in the unfolded state, the sixth support surface and the seventh support surface are located between the first support surface and the second support surface; and when the folding assembly is in the folded state, the sixth support surface and the seventh support surface are arranged opposite to each other.

In some embodiments of the first aspect, when the folding assembly is in the folded state, the sixth support surface and the seventh support surface form an angle, a distance between an edge of the sixth support surface away from the first support member and an edge of the seventh support surface away from the second support member is a third distance, a distance between an edge of the sixth support surface close to the first support member and an edge of the seventh support surface close to the second support member is a fourth distance, and the third distance is greater than the fourth distance.

In some embodiments of the first aspect, a first arc-shaped arm is arranged on the first main swing arm, and a first arc-shaped groove is provided on the seat, or a first arc-shaped groove is provided on the first main swing arm, and a first arc-shaped arm is arranged on the seat, where the first arc-shaped arm slidably fits the first arc-shaped groove, to rotatably connect the first main swing arm to the seat; and
a second arc-shaped arm is arranged on the second main swing arm, and a second arc-shaped groove is provided on the seat, or a second arc-shaped groove is provided on the second main swing arm, and a second arc-shaped arm is arranged on the seat, where the second arc-shaped arm slidably fits the second arc-shaped groove, to rotatably connect the second main swing arm to the seat.

In some embodiments of the first aspect, a third arc-shaped arm is arranged on the first support member, and a third arc-shaped groove is provided on the first fixing member, or a third arc-shaped groove is provided on the first support member, and a third arc-shaped arm is arranged on the first fixing member, where the third arc-shaped arm slidably fits the third arc-shaped groove, to rotatably connect the first support member to the first fixing member; and
a fourth arc-shaped arm is arranged on the second support member, and a fourth arc-shaped groove is provided on the second fixing member, or a fourth arc-shaped groove is provided on the second support member, and a fourth arc-shaped arm is arranged on the second fixing member, where the fourth arc-shaped arm slidably fits the fourth arc-shaped groove, to rotatably connect the second support member to the second fixing member.

According to a second aspect, embodiments of this application provide a folding apparatus. The folding apparatus includes:
a first housing;
a second housing; and
the folding assembly according to any embodiment of the first aspect, where the first fixing member is fixedly connected to the first housing, and the second fixing member is fixedly connected to the second housing.

According to a third aspect, embodiments of this application provide a terminal device. The terminal device includes:
the folding apparatus according to the second aspect; and
a foldable screen, arranged on the first housing and the second housing, where a position of a foldable part of the foldable screen corresponds to a position of the folding assembly.

It may be understood that for beneficial effects of the second aspect and the third aspect, reference may be made to the related descriptions in the first aspect. Details are not described herein.

### BRIEF DESCRIPTION OF DRAWINGS

FIG. 1 is a schematic diagram of a structure of an electronic device in an unfolded state in the related art;
FIG. 2 is a schematic diagram of a structure of an electronic device in a folded state in the related art;
FIG. 3 is a schematic diagram of a structure of a terminal device in an unfolded state according to an embodiment of this application;
FIG. 4 is a schematic diagram of a structure of the terminal device shown in FIG. 3 in a folded state;
FIG. 5 is a schematic diagram of a structure of a folding apparatus according to an embodiment of this application;
FIG. 6 is a schematic diagram of a structure of a folding assembly in an unfolded state according to an embodiment of this application;
FIG. 7 is a front view of the folding assembly shown in FIG. 6 in an unfolded state;
FIG. 8 is a front view of the folding assembly shown in FIG. 6 in a folded state fitting a foldable screen;
FIG. 9 is an exploded view of the folding assembly shown in FIG. 6;
FIG. 10 is a schematic diagram of a structure of a first main swing arm fitting a third support member according to an embodiment of this application;
FIG. 11 is a schematic diagram of a structure of a second main swing arm fitting a fourth support member according to an embodiment of this application;
FIG. 12 is a schematic diagram of a structure of a first auxiliary swing arm fitting a first pushing portion according to an embodiment of this application;
FIG. 13 is a schematic diagram of a structure of a second auxiliary swing arm fitting a second pushing portion according to an embodiment of this application;
FIG. 14 is a schematic diagram of a structure of a first support member according to an embodiment of this application;
FIG. 15 is a schematic diagram of a structure of a second support member according to an embodiment of this application;
FIG. 16 is a schematic cross-sectional view of a folding assembly in an unfolded state according to an embodiment of this application;
FIG. 17 is a schematic cross-sectional view of a folding assembly in an intermediate state between an unfolded state and a folded state according to an embodiment of this application;
FIG. 18 is a schematic cross-sectional view of a folding assembly in a folded state according to an embodiment of this application;
FIG. 19 is a schematic diagram of a structure of a door plate according to an embodiment of this application;
FIG. 20 is another schematic cross-sectional view of a folding assembly in an unfolded state according to an embodiment of this application; and
FIG. 21 is another schematic cross-sectional view of a folding assembly in a folded state according to an embodiment of this application.

Reference numerals in the accompanying drawings:
1. electronic device; 01. body; 02. flexible display screen; 021: flexibly deformable part; 011: folding mechanism; 012: first side plate; 013. second side plate;
10000: terminal device; 2000. foldable screen; 2100. foldable part;
1000. folding apparatus; 200. first housing; 300. second housing; 201: first surface; 301. second surface;
100: folding assembly; 10: seat; 21. first fixing member; 22. second fixing member; 31. first main swing arm; 32. second main swing arm; 41. first support member; 42. second support member; 410: first support surface; 420. second support surface;
312. first arc-shaped arm; 13. first arc-shaped groove; 322. second arc-shaped arm; 14. second arc-shaped groove; 412. third arc-shaped arm; 212. third arc-shaped groove; 422. fourth arc-shaped arm; 222. fourth arc-shaped groove; 81. first rotating shaft; 82. second rotating shaft; 15. shaft cover; 16. base; 150: accommodating space; 51. first auxiliary swing arm; 52. second auxiliary swing arm; 2101: first sliding space; 2201: second sliding space; 83. third rotating shaft; 84. fourth rotating shaft; 91. first gear; 92. second gear; 93. third gear; 94. fourth gear;
411. first sliding portion; 311. first sliding fitting portion; 4111: first track groove; 3111: first sliding body; 421. second sliding portion; 321. second sliding fitting portion; 4211. second track groove; 3211. second sliding body; 41111: first slide groove; 41112: second slide groove; 42111: third slide groove; 42112: fourth slide groove; 4111a: first end; 4111b: second end; 4211a. third end; 4211b: fourth end;
211: first groove; 221. second groove; 2111: first inner bottom surface; 2110: first gap; 2211. second inner bottom surface; 2210: second gap; 210: third support surface; 220: fourth support surface; 111. first support portion; 121. second support portion; 11. first limiting groove; 12. second limiting groove; 101. fifth support surface;
60. door plate; 61. first fitting portion; 62. second fitting portion; 511. first pushing portion; 521. second pushing portion; 6111: first part; 6211: second part; 6112: third part; 6212: fourth part; 611: first fitting groove; 621. second fitting groove; 512. first connecting arm; 522. second connecting arm;
71. third support member; 72. fourth support member; 710: sixth support surface; 720. seventh support surface.

### DESCRIPTION OF EMBODIMENTS

Embodiments of this application are described below in detail, and examples of embodiments are shown in accompanying drawings, where the same or similar elements or the elements having same or similar functions are denoted by the same or similar reference numerals throughout the description. Embodiments described below with reference to the accompanying drawings are exemplary and used merely for explaining this application, and should not be construed as a limitation on this application.

In the description of this application, it should be understood that orientation or position relationships indicated by the terms, such as "length", "width", "thickness", "top", "bottom", "inner", "outer", "up", "down", "left", and "right", are based on orientation or position relationships shown in the accompanying drawings, and are used only for ease and brevity of illustration and description, rather than indicating or implying that the mentioned apparatus or component needs to have a particular orientation or needs be constructed and operated in a particular orientation. Therefore, such terms should not be construed as limiting of this application.

The terms, such as "first", "second", "third", and "fourth", are used for distinctive descriptions only and should not be construed as indicating or implying relative importance or implicitly indicating a quantity of technical features indicated. For example, a first support member and a second support member are merely used to distinguish between different devices, and are not intended to limit a sequence thereof. The first support member may also be referred to as a second support member, and the second support member may also be referred to as a first support member without departing from the scope of various described embodiments. In addition, terms, such as "first", "second", "third", and "fourth", do not limit that the indicated features are necessarily different.

In this application, unless otherwise explicitly specified and defined, the terms, such as "connected" and "connection", should be understood in a broad sense. For example, a connection may be a fixed connection, a detachable connection, or an integral connection. A relationship between two components defined by terms, such as "connected", "connection", and "fixed", may be a mechanical connection or an electrical connection, or may be a direct connection, an indirect connection through an intermediate, or internal communication between two elements or an interaction relationship between two elements. A person of ordinary skill in the art may understand the specific meanings of the foregoing terms in this application according to specific situations.

In this application, "and/or" describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that in this application, the terms, such as "in some embodiments", "exemplarily", or "for example", are used to represent giving an example, an illustration, or a description. In this application, any embodiment or design scheme described by using "in some embodiments", "exemplarily", or "for example" should not be explained as being more preferred or having more advantages than another embodiment or design scheme. Exactly, use of the terms, such as "in some embodiments", "exemplarily", and "for example", is intended to present a relative concept in a specific manner.

To make the objectives, technical solutions, and advantages of this application clearer and more understandable, this application is further described in detail below with reference to accompanying drawings and embodiments.

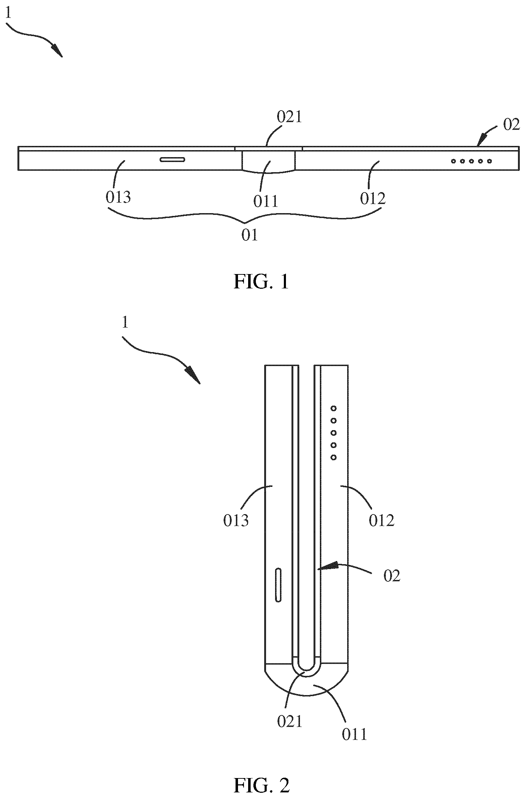

Referring to FIG. 1 and FIG. 2, FIG. 1 is a front view of a foldable electronic device 1 in the related art in an unfolded state, and FIG. 2 is a front view of the electronic device 1 shown in FIG. 1 in a folded state. The electronic device 1 includes a body 01 and a flexible display screen 02 arranged on the body 01. The body 01 includes a folding mechanism 011, a first side plate 012, and a second side plate 013. The first side plate 012 and the second side plate 013 are respectively connected to two sides of the folding mechanism 011 and can rotate between the unfolded state and the folded state based on the folding mechanism 011. The flexible display screen 02 is arranged on the first side plate 012 and the second side plate 013, and can be folded or unfolded as the first side plate 012 and the second side plate 013 rotate.

By comparing FIG. 1 with FIG. 2, it can be learned that when the flexible display screen 02 is in the folded state, a flexibly deformable part 021 of the flexible display screen 02 is bent, and the folding mechanism 011 applies a force to the flexibly deformable part 021, which may cause the flexibly deformable part 021 to be pulled, squeezed, and so on, and easily cause the flexibly deformable part 021 to have defects, such as arching, wrinkling, or even damage, resulting in impact on an appearance and a service life of the flexible display screen 02 in the folded state and further impact on a service life of the electronic device 1 and user experience.

In view of this, embodiments of this application provide a folding assembly, a folding apparatus including the folding assembly, and a terminal device including the folding apparatus, to alleviate a technical problem in the related art that a flexibly deformable part of a flexible display screen is susceptible to damage caused by a force from a folding mechanism.

The terminal device provided in embodiments of this application is a foldable electronic device, that is, an electronic device that can be folded and unfolded. The terminal device may be a mobile phone, a tablet computer, a laptop computer (laptop), a notebook computer (notebook PC), a personal digital assistant (personal digital assistant, PDA), a wearable device (for example, a watch), an in-vehicle device, an augmented reality (augmented reality, AR) device, a virtual reality (virtual reality, VR) device, or the like, but is not limited thereto. For ease of understanding, in embodiments of this application, descriptions are provided by using an example in which the terminal device is a mobile phone.

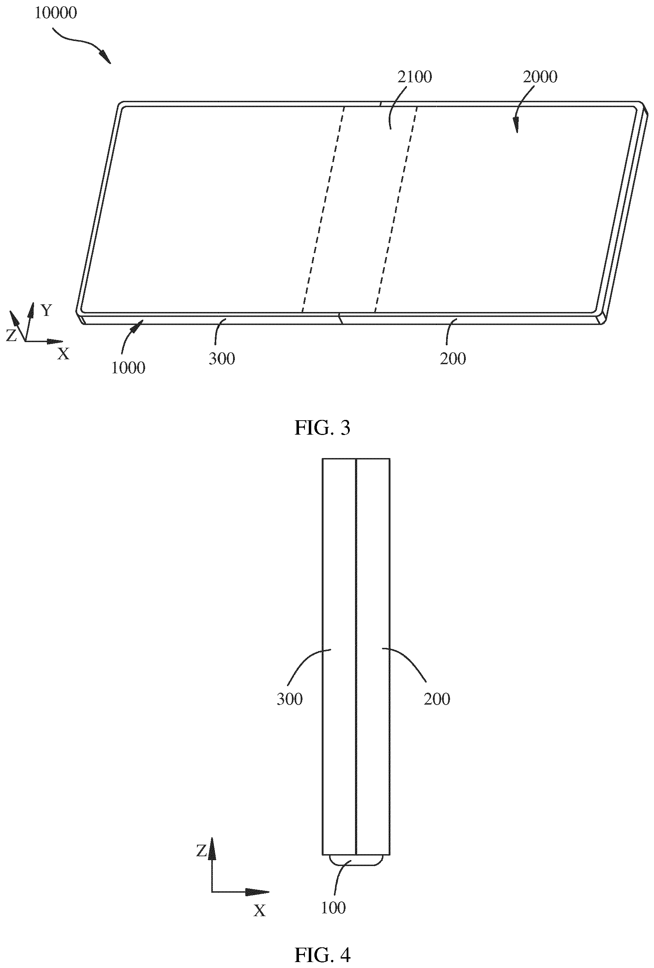

Referring to FIG. 3 and FIG. 4, FIG. 3 is a schematic diagram of a structure of a terminal device 10000 in an unfolded state according to some embodiments of this application, and FIG. 4 is a schematic diagram of a structure of the terminal device 10000 shown in FIG. 3 in a folded state. Under different use requirements, the terminal device 10000 may be unfolded to an unfolded state, or may be folded to a folded state, or may be in an intermediate state between the unfolded state and the folded state. It should be understood that the intermediate state may be any state of the terminal device 10000 between the unfolded state and the folded state, rather than a unique state.

The terminal device 10000 includes a folding apparatus 1000 and a foldable screen 2000. The foldable screen 2000 is arranged on the folding apparatus 1000. The folding apparatus 1000 can provide support and protection for the foldable screen 2000, and can be folded or unfolded. The foldable screen 2000 is a flexible screen, and therefore, can be folded or unfolded together with the folding apparatus 1000. It may be understood that the foldable screen 2000 can be configured to display information and provide an interactive interface for a user, and may be a plurality of types of display screens.

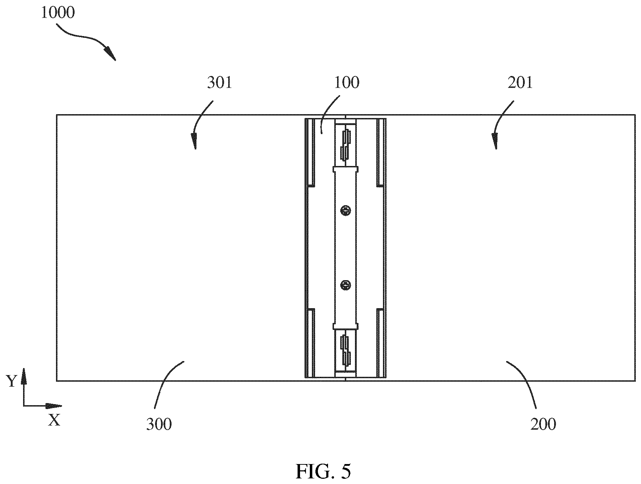

FIG. 5 is a schematic diagram of a structure of a folding apparatus 1000 according to some embodiments of this application. The folding apparatus 1000 includes a folding assembly 100, a first housing 200, and a second housing 300. The folding assembly 100 is located between the first housing 200 and the second housing 300, and is connected to the first housing 200 and the second housing 300 respectively. The first housing 200 and the second housing 300 may rotate relative to each other based on the folding assembly 100, so that the first housing 200 and the second housing 300 can move closer to each other to rotate to a folded state or move away from each other to rotate to an unfolded state.

It may be understood that there may be one or more folding assemblies 100. When there are a plurality of folding assemblies 100, the folding assemblies 100 may be sequentially spaced apart and all located between the first housing 200 and the second housing 300.

Still referring to FIG. 3 and FIG. 5, the foldable screen 2000 is arranged on the first housing 200 and the second housing 300, and can be folded or unfolded as the first housing 200 and the second housing 300 rotate. The foldable screen 2000 includes a foldable part 2100, and a position of the foldable part 2100 corresponds to a position of the folding assembly 100. That is, the foldable part 2100 and the folding assembly 100 are arranged opposite to each other. The foldable part 2100 is flexible, so that when the first housing 200 and the second housing 300 rotate relative to each other, the foldable screen 2000 can be folded by bending the foldable part 2100. It may be understood that a part of the foldable screen 2000 corresponding to the first housing 200 may be flexible or rigid. A part of the foldable screen 2000 corresponding to the second housing 300 may also be flexible or rigid.

Exemplarily, the terminal device 10000 may be an inward-folding terminal device, and the foldable screen 2000 is an inward-folding foldable screen. After the foldable screen 2000 is folded, a display surface of the foldable screen 2000 is located on an inner side. A back surface of the foldable screen 2000 is arranged on the first housing 200 and the second housing 300, and the display surface of the foldable screen 2000 is exposed. The display surface of the foldable screen 2000 is a surface configured to display an image, and the back surface of the foldable screen 2000 is another surface opposite to the display surface.

Referring to FIG. 3 and FIG. 5, when the terminal device 10000 is in the unfolded state, the folding apparatus 1000 and the foldable screen 2000 are also in the unfolded state, and a first surface 201 of the first housing 200 for mounting the foldable screen 2000 and a second surface 301 of the second housing 300 for mounting the foldable screen 2000 are substantially in a same plane, that is, an angle between the first surface 201 and the second surface 301 is substantially 180°. In this case, the foldable screen 2000 is substantially in a flat flattened state, so that the terminal device 10000 has a large display area. It should be understood that, when the folding apparatus 1000 is in the unfolded state, the angle between the first surface 201 and the second surface 301 is not limited to an absolute 180°, and the angle between the first surface 201 and the second surface 301 may alternatively be greater than or less than 180°, but close to 180°. For example, the angle may range from 165° to 190° (for example, 170°, 173°, 175°, 182°, or 185°, but is not limited thereto), and the foldable screen 2000 can also be unfolded.

Referring to FIG. 4, when the terminal device 10000 is in the folded state, the folding apparatus 1000 and the foldable screen 2000 are also in the folded state. The first surface 201 of the first housing 200 for mounting the foldable screen 2000 and the second surface 301 of the second housing 300 for mounting the foldable screen 2000 are arranged opposite to and substantially parallel to each other, that is, an angle between the first surface 201 and the second surface 301 is substantially 0°. In this case, the foldable screen 2000 is folded relative to the foldable part 2100 to be in the folded state, and is located between the first housing 200 and the second housing 300, to facilitate storage of the terminal device 10000 and reduce a possibility of damage to the foldable screen 2000 from the outside. It should be understood that when the folding apparatus 1000 is in the unfolded state, the first surface 201 and the second surface 301 are not limited to being absolutely parallel, and the angle between the first surface 201 and the second surface 301 may alternatively be greater than 0°, but close to 0°. For example, the angle may range from 0° to 15 (for example, 1°, 2°, 3°, 5°, or 10°, but is not limited thereto), and the foldable screen 2000 can also be folded.

Optionally, at least one of the first housing 200 and the second housing 300 may be provided with a mounting space for mounting electronic components of the terminal device 10000. For example, the electronic components may include a circuit board, a battery, a receiver, a speaker, a camera, and the like, but are not limited thereto. The circuit board may integrate electronic components, such as a main controller, a storage unit, an antenna module, and a power management module, of the terminal device 10000. The battery may supply power to electronic components such as the foldable screen 2000, the circuit board, the receiver, the speaker, and the camera. The first housing 200 and the second housing 300 may have the same or different shapes and structures. This is not limited in this embodiment of this application. The first housing 200 and the second housing 300 may be middle frame structures.

The folding assembly 100 provided in this embodiment of this application is described below.

To facilitate description of the following embodiments, an XYZ three-axis rectangular coordinate system is established. A width direction of the folding assembly 100 is defined as an X-axis direction. The X-axis direction is parallel to a direction in which the first housing 200 points to the second housing 300 when the terminal device 10000 is in the unfolded state. A length direction of the folding assembly 100 is defined as a Y-axis direction. The Y-axis direction is parallel to a direction in which one side edge of the first housing 200 points to an other side edge opposite to the one side edge when the terminal device 10000 is in the unfolded state. A thickness direction of the folding assembly 100 is defined as a Z-axis direction. The Z-axis direction is parallel to a direction in which the first housing 200 points to the foldable screen 2000 when the terminal device 10000 is in the unfolded state, that is, parallel to the thickness direction of the terminal device 10000. The X-axis direction, the Y-axis direction, and the Z-axis direction are perpendicular to each other pairwise. The X-axis direction includes a positive X-axis direction and a negative X-axis direction, and so do the Y-axis direction and the Z-axis direction. It should be understood that the coordinate system of the folding assembly 100 may be flexibly set according to actual requirements. This application provides only one example, which cannot be considered as a special limitation on this application.

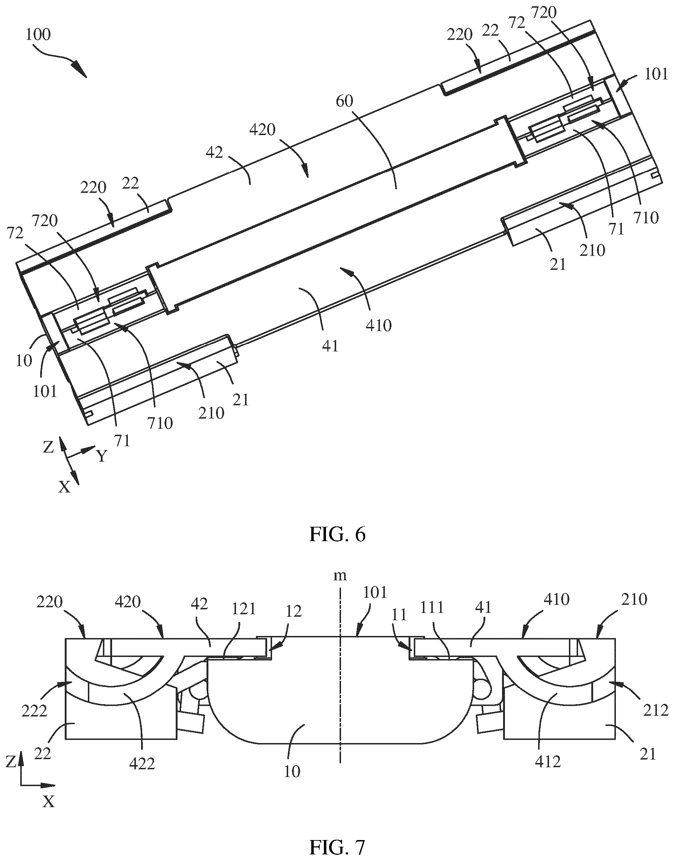

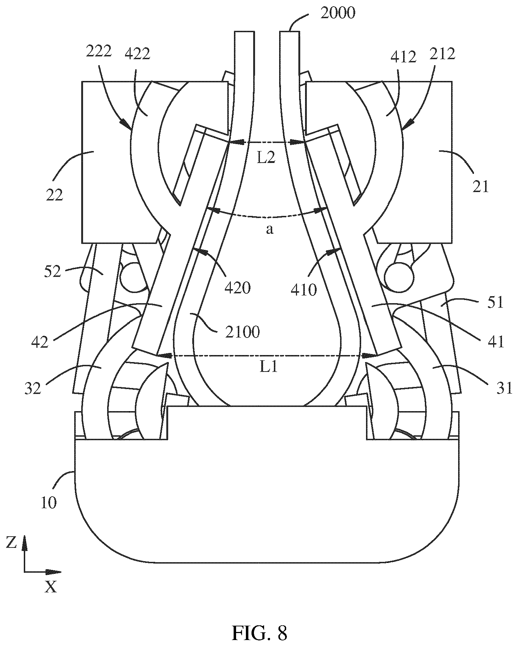

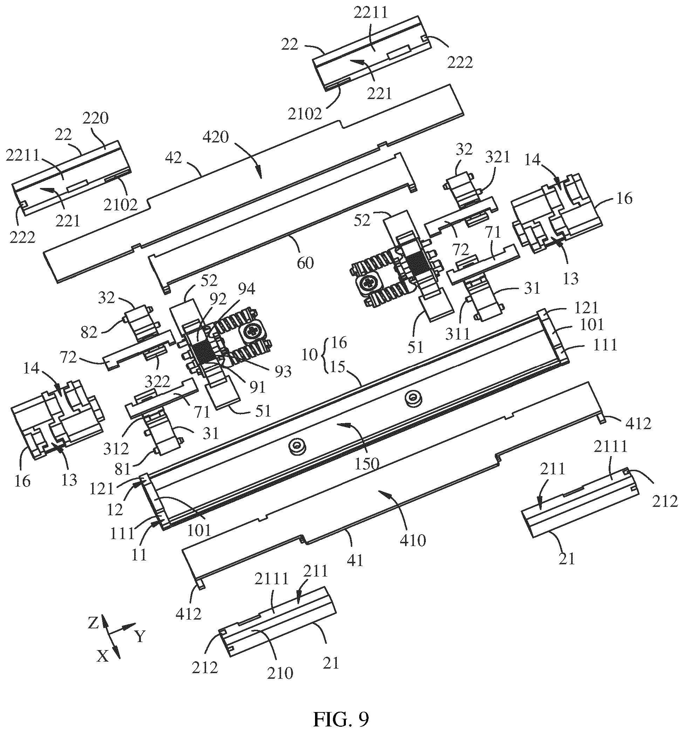

Referring to FIG. 6 to FIG. 9, FIG. 6 is a three-dimensional schematic diagram of a structure of a folding assembly 100 in an unfolded state according to some embodiments of this application. FIG. 7 is a front view of the folding assembly 100 shown in FIG. 6 in an unfolded state. FIG. 8 is a front view of the folding assembly 100 shown in FIG. 6 fitting a foldable part 2100 of a foldable screen 2000 when being folded to a folded state. FIG. 9 is an exploded view of the folding assembly 100 shown in FIG. 6. The folding assembly 100 includes a seat 10, a first fixing member 21, a second fixing member 22, a first main swing arm 31, a second main swing arm 32, a first support member 41, and a second support member 42.

The seat 10 may support and connect the first main swing arm 31 and the second main swing arm 32, and may be a structure in various regular or irregular shapes, for example, a blocky structure, a frame structure, a housing structure, or a plate structure, but is not limited thereto. The seat 10 may be a single component, or may include a plurality of assembled components. In some cases, the seat 10 is also referred to as a main shaft, a main body, or the like.

The first fixing member 21 and the second fixing member 22 are respectively located on two sides of the seat 10. It should be understood that the two sides of the seat 10 are two sides using a central longitudinal section m of the seat 10 as an interface. The central longitudinal section m is a plane that is parallel to a length direction (that is, a Y-axis direction) and a thickness direction (that is, a Z-axis direction) of the seat 10 and that bisects the seat 10 along a width direction (that is, an X-axis direction) of the seat 10. The first fixing member 21 and the second fixing member 22 may be arranged opposite to each other, that is, at a same position in the length direction of the seat 10. Certainly, in some cases, the first fixing member 21 and the second fixing member 22 may not be arranged opposite to each other, that is, are staggered in the length direction of the seat 10.

The first fixing member 21 is configured to fixedly connect to the first housing 200, and the second fixing member 22 is configured to fixedly connect to the second housing 300. When the first housing 200 and the second housing 300 rotate relative to each other, the first fixing member 21 and the second fixing member 22 are driven to rotate respectively. It may be understood that the first fixing member 21 and the first housing 200 may be separately formed to be connected, for example, may be connected by a fastener (for example, a bolt, a screw, a pin, or a rivet). Certainly, in some other cases, the first fixing member 21 and the first housing 200 may alternatively be an integrated structure integrally formed. Similarly, the second fixing member 22 and the second housing 300 may be separately formed to be connected, or may be an integrated structure integrally formed. It may be understood that the first fixing member 21 and the second fixing member 22 may be structural members in various regular or irregular shapes, for example, blocky structures or plate-shaped structures, but are not limited thereto.

The first main swing arm 31 is rotatably connected to the seat 10, and the first main swing arm 31 is rotatably connected to the first fixing member 21. The first fixing member 21 is rotatably connected to the seat 10 by the first main swing arm 31. A manner in which the first main swing arm 31 is rotatably connected to the seat 10 may be the same as or different from a manner in which the first main swing arm 31 is rotatably connected to the first fixing member 21. The second main swing arm 32 is rotatably connected to the seat 10, and the second main swing arm 32 is rotatably connected to the second fixing member 22. The second fixing member 22 is rotatably connected to the seat 10 by the second main swing arm 32. A manner in which the second main swing arm 32 is rotatably connected to the seat 10 may be the same as or different from a manner in which the second main swing arm 31 is rotatably connected to the second fixing member 22. It may be understood that the first main swing arm 31 and the second main swing arm 32 may be swing arm structures in various shapes, and the first main swing arm 31 and the second main swing arm 32 may have the same or different shapes and structures. This is not limited in this embodiment of this application.

Optionally, two opposite ends of the first main swing arm 31 may be rotatably connected to the seat 10 and the first fixing member 21 respectively. Certainly, the first main swing arm 31 is not limited to being rotatably connected to the seat 10 or the first fixing member 21 by a part at the end of the first main swing arm 31, and may alternatively be rotatably connected to the seat 10 or the first fixing member 21 by another part. Similarly, two opposite ends of the second main swing arm 32 may be rotatably connected to the seat 10 and the second fixing member 22 respectively. Certainly, the second main swing arm 32 is not limited to being rotatably connected to the seat 10 or the second fixing member 22 by a part at the end of the second main swing arm 32.

The first support member 41 is rotatably connected to the first fixing member 21, and the first support member 41 is slidably and rotatably connected to the first main swing arm 31, so that the first support member 41 and the first main swing arm 31 can slide and rotate relative to each other. The first support member 41 includes a first support surface 410. The first support surface 410 is configured to support the foldable part 2100 of the foldable screen 2000. The second support member 42 is rotatably connected to the second fixing member 22, and the second support member 42 is slidably and rotatably connected to the second main swing arm 32, so that the second support member 42 and the second main swing arm 32 can slide and rotate relative to each other. The second support member 42 includes a second support surface 420. The second support surface 420 is configured to support the foldable part 2100 of the foldable screen 2000. It may be understood that the first support member 41 and the second support member 42 may be structures in various shapes, for example, may be plate-shaped structures or sheet-shaped structures, which is conducive to forming the first support surface 410 with a specific area and the second support surface 420 with a specific area, to better support the foldable part 2100. Certainly, in some other cases, the first support member 41 and the second support member 42 may be structures in other shapes such as blocky structures.

The first fixing member 21 and the second fixing member 22 are relatively rotatable based on the seat 10, to switch the folding assembly 100 between an unfolded state and a folded state. When the folding assembly 100 is switched from the unfolded state to the folded state, that is, when the first fixing member 21 and the second fixing member 22 rotate closer to each other or rotate toward each other, the first fixing member 21 drives the first main swing arm 31 and the first support member 41 to rotate relative to the seat 10. In this process, the first main swing arm 31 rotates relative to the first fixing member 21, and the first main swing arm 31 and the first support member 41 slide and rotate relative to each other. In other words, while the first main swing arm 31 rotates relative to the first fixing member 21, the first support member 41 is driven to slide and rotate relative to the first main swing arm 31 (because the first support member 41 is rotatably connected to the first fixing member 21, the first support member 41 is not susceptible to sticking when sliding and rotating relative to the first main swing arm 31). The second fixing member 22 drives the second main swing arm 32 and the second support member 42 to rotate relative to the seat 10. In this process, the second main swing arm 32 rotates relative to the second fixing member 22, and the second main swing arm 32 and the first support member 41 slide and rotate relative to each other. That is, while the second main swing arm 32 rotates relative to the second fixing member 22, the second support member 42 is driven to slide and rotate relative to the second main swing arm 32 (because the second support member 42 is rotatably connected to the second fixing member 22, the second support member 42 is not prone to sticking when sliding and rotating relative to the second main swing arm 32), so that when the folding assembly 100 is in the folded state, the first support surface 410 and the second support surface 420 are arranged opposite to each other and form an angle a (the angle a is greater than 0° and less than 180°, for example, may be an acute angle, a right angle, or an obtuse angle). In addition, a distance between an edge of the first support surface 410 close to the seat 10 and an edge of the second support surface 420 close to the seat 10 is a first distance L1, a distance between an edge of the first support surface 410 away from the seat 10 and an edge of the second support surface 420 away from the seat 10 is a second distance L2, and the first distance L1 is greater than the second distance L2, for example, as shown in FIG. 8.

It can be learned from the foregoing descriptions, in the folding assembly 100 provided in this embodiment of this application, because when the first fixing member 21 and the second fixing member 22 rotate relative to each other based on the seat 10, to switch the folding assembly 100 from the unfolded state to the folded state, the first main swing arm 31 rotates relative to the first fixing member 21, the first main swing arm 31 and the first support member 41 slide and rotate relative to each other, the second main swing arm 32 rotates relative to the second fixing member 22, and the second main swing arm 32 and the first support member 41 slide and rotate relative to each other, to enable the first support surface 410 and the second support surface 420 to be arranged opposite to each other and form an angle a when the folding assembly 100 is in the folded state. In addition, the first distance L1 between the edges of the first support surface 410 and the second support surface 420 close to the seat 10 is greater than the second distance L2 between the edges thereof away from the seat 10. Therefore, a space with a side close to the seat 10 larger than a side away from the seat 10 can be formed between the first support surface 410 and the second support surface 420, and can accommodate the foldable part 2100 of the foldable screen 2000, which is conducive to presenting the foldable part 2100 substantially in a water drop shape without completely folding the foldable part 2100 in half, can effectively reduce a possibility of damage to the foldable part 2100 of the foldable screen 2000 due to an excessively large degree of folding deformation, is conducive to improving the appearance of the foldable screen 2000 in the folded state, and is conducive to improving service lives of the foldable screen 2000 and the terminal device 10000.

In addition, because the first main swing arm 31 is slidably and rotatably connected to the first support member 41, that is, the first support member 41 is driven by the first main swing arm 31 to move, and the second main swing arm 32 is slidably and rotatably connected to the second support member 42, that is, the second support member 42 is driven by the second main swing arm 32 to move, compared with driving the first support member 41 by the first auxiliary swing arm rotatably connected to the seat 10 and slidably connected to the first fixing member 21 to move and driving the second support member 42 by the second auxiliary swing arm rotatably connected to the seat 10 and slidably connected to the second fixing member 22 to move, it is conducive to reducing relative sliding strokes of the first support member 41 and the first main swing arm 31, and reducing relative sliding strokes of the second support member 42 and the second main swing arm 32, thereby helping to improve structural compactness and reduce the size, which is conducive to miniaturization and thinning of the folding assembly 100.

In some embodiments, referring to FIG. 7 and FIG. 8, when the folding assembly 100 is switched from the folded state to the unfolded state, that is, when the first fixing member 21 and the second fixing member 22 rotate away from each other or rotate facing away from each other, the first fixing member 21 drives the first main swing arm 31 and the first support member 41 to rotate relative to the seat 10. In this process, the first main swing arm 31 rotates relative to the first fixing member 21, and the first main swing arm 31 and the first support member 41 slide and rotate relative to each other. In other words, while the first main swing arm 31 rotates relative to the first fixing member 21, the first support member 41 is driven to slide and rotate relative to the first main swing arm 31. The second fixing member 22 drives the second main swing arm 32 and the second support member 42 to rotate relative to the seat 10. In this process, the second main swing arm 32 rotates relative to the second fixing member 22, and the second main swing arm 32 and the first support member 41 slide and rotate relative to each other. That is, while the second main swing arm 32 rotates relative to the second fixing member 22, the second support member 42 is driven to slide and rotate relative to the second main swing arm 32, so that when the folding assembly 100 is in the unfolded state, the first support surface 410 and the second support surface 420 are flush with each other, that is, substantially coplanar, but allow existence of a tolerance. For example, a height difference between the first support surface 410 and the second support surface 420 may range from 0 mm to 5 mm, and an angle between the first support surface 410 and the second support surface 420 may range from 0° to 12° (which is, for example, 1°, 2°, 3°, 5°, or 10°, but is not limited thereto). In this way, it is conducive to improving flatness of the foldable part 2100 of the foldable screen 2000 supported on the first support surface 410 and the second support surface 420 when the folding assembly 100 is in the unfolded state, so that the foldable part 2100 of the foldable screen 2000 is unlikely to be dented or wrinkled, thereby improving the display effect.

The following describes a manner in which the first main swing arm 31 and the second main swing arm 32 are rotatably connected to the seat 10.

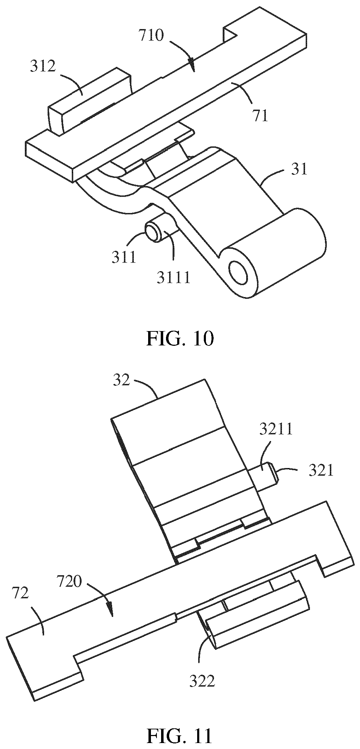

In some embodiments, referring to FIG. 9 and FIG. 10, FIG. 10 is a schematic diagram of a structure of a first main swing arm 31 according to an embodiment of this application. A first arc-shaped arm 312 is arranged on the first main swing arm 31. The first arc-shaped arm 312 is a substantially circular arc-shaped structural body. A first arc-shaped groove 13 is provided on the seat 10. The first arc-shaped groove 13 is a substantially arc-shaped groove. The first arc-shaped arm 312 slidably fits the first arc-shaped groove 13, to rotatably connect the first main swing arm 31 to the seat 10. Therefore, a rotation axis of the first arc-shaped arm 312 substantially coincides with a rotation axis of the first arc-shaped groove 13. When the first arc-shaped arm 312 slides in the first arc-shaped groove 13 along an arc-shaped track of the first arc-shaped groove 13, the first arc-shaped arm 312 rotates relative to the seat 10. In this case, it may be considered that the first main swing arm 31 is rotatably connected to the seat 10 by an imaginary shaft.

Similarly, referring to FIG. 9 and FIG. 11, FIG. 11 is a schematic diagram of a structure of a second main swing arm 32 according to an embodiment of this application. A second arc-shaped arm 322 is arranged on the second main swing arm 32, and a second arc-shaped groove 14 is provided on the seat 10. The second arc-shaped arm 322 slidably fits the second arc-shaped groove 14, to rotatably connect the second main swing arm 32 to the seat 10. Therefore, a rotation axis of the second arc-shaped arm 322 substantially coincides with a rotation axis of the second arc-shaped groove 14. When the second arc-shaped arm 322 slides in the second arc-shaped groove 14 along an arc-shaped track of the second arc-shaped groove 14, the second arc-shaped arm 322 rotates relative to the seat 10. In this case, it may be considered that the second main swing arm 32 is rotatably connected to the seat 10 by an imaginary shaft.

Through such arrangements, when the folding assembly 100 is switched from the unfolded state to the folded state, the first arc-shaped arm 312 can slide in the first arc-shaped groove 13 and can partially extend to the outside, which is conducive to driving the first support member 41 to move away from the seat 10, and the second arc-shaped arm 322 can slide in the second arc-shaped groove 14 and can partially extend to the outside, which is conducive driving the second support member 42 to move away from the seat 10, thereby helping to increase a space formed between the first support member 41, the second support member 42, and the seat 10. That is, a larger accommodating space can be provided for the foldable part 2100 of the foldable screen 2000, to reduce the possibility that the foldable part 2100 is squeezed and damaged.

It may be understood that, in some other embodiments, positions of the first arc-shaped arm 312 and the first arc-shaped groove 13 can be swapped. That is, the first arc-shaped groove 13 may be provided on the first main swing arm 31, and the first arc-shaped arm 312 may be arranged on the seat 10, so that the first main swing arm 31 can also be rotatably connected to the seat 10. Similarly, positions of the second arc-shaped arm 322 and the second arc-shaped groove 14 can be swapped. That is, the second arc-shaped groove 14 may be provided on the second main swing arm 32, and the second arc-shaped arm 322 may be arranged on the seat 10.

It should be noted that the first main swing arm 31 and the seat 10 are not limited to being rotatably connected by an imaginary shaft. In some other possible embodiments, the first main swing arm 31 and the seat 10 may alternatively be rotatably connected by a shaft or a pin. The second main swing arm 32 and the seat 10 are not limited to being rotatably connected by an imaginary shaft. In some other possible embodiments, the second main swing arm 32 and the seat 10 may alternatively be rotatably connected by a shaft or a pin.

Optionally, in some embodiments, referring to FIG. 9, along the length direction (that is, the Y-axis direction) of the seat 10, the first main swing arm 31 and the second main swing arm 32 are sequentially arranged, that is, the first main swing arm 31 and the second main swing arm 32 are staggered, rather than located at a same position. This helps reduce a width of the folding assembly 100 along the width direction (that is, the X-axis direction) of the seat 10.

Certainly, in some other embodiments, along the length direction (that is, the Y-axis direction) of the seat 10, the first main swing arm 31 and the second main swing arm 32 may alternatively be located at a same position, that is, be substantially symmetrically arranged.

The following describes a manner in which the first main swing arm 31 is rotatably connected to the first fixing member 21 and a manner in which the second main swing arm 32 is rotatably connected to the second fixing member 22.

In some embodiments, referring to FIG. 9 and FIG. 10, the first main swing arm 31 may be rotatably connected to the first fixing member 21 by a first rotating shaft 81. Optionally, a first shaft hole may be provided on the first main swing arm 31, a second shaft hole may be provided on the first fixing member 21, and the first rotating shaft 81 may be fitted with the first shaft hole and the second shaft hole, so that the first main swing arm 31 is rotatably connected to the first fixing member 21 by the first rotating shaft 81. Certainly, in some other cases, the first rotating shaft 81 may alternatively be an integrated structure integrally formed with one of the first main swing arm 31 and the first fixing member 21, and be rotatably connected to the other.

Similarly, referring to FIG. 9 and FIG. 11, the second main swing arm 32 may be rotatably connected to the second fixing member 22 by a second rotating shaft 82. Optionally, a third shaft hole may be provided on the second main swing arm 32, a fourth shaft hole may be provided on the second fixing member 22, and the second rotating shaft 82 may be fitted with the third shaft hole and the fourth shaft hole, so that the second main swing arm 32 is rotatably connected to the second fixing member 22 by the second rotating shaft 82. Certainly, in some other cases, the second rotating shaft 82 may alternatively be an integrated structure integrally formed with one of the second main swing arm 32 and the second fixing member 22, and be rotatably connected to the other.

It should be noted that in some other embodiments, the first main swing arm 31 may alternatively be rotatably connected to the first fixing member 21 in a manner of an imaginary shaft. For example, an arc-shaped arm may be arranged on the first main swing arm 31, and an arc-shaped groove may be arranged on the first fixing member 21. Alternatively, an arc-shaped groove is provided on the first main swing arm 31, and an arc-shaped groove is arranged on the first fixing member 21. The arc-shaped arm slidably fits the arc-shaped groove, so that the first main swing arm 31 is rotatably connected to the first fixing member 21. Similarly, the second main swing arm 32 may also be rotatably connected to the second fixing member 22 in a manner of an imaginary shaft. For a specific connection manner, refer to the connection between the first main swing arm 31 and the first fixing member 21. Details are not described herein again.

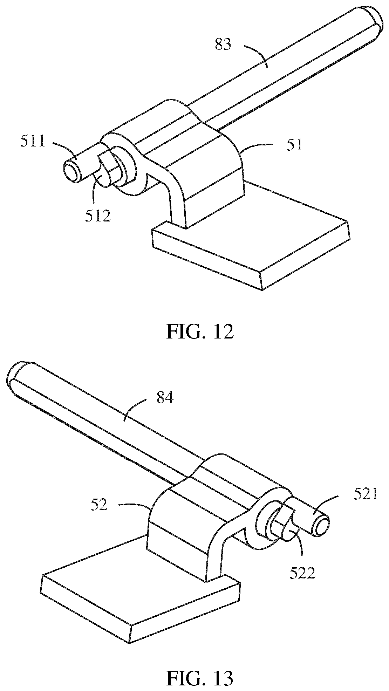

To improve stability of relative rotation between the first fixing member 21 and the second fixing member 22, in some embodiments, referring to FIG. 9, FIG. 12, and FIG. 13, FIG. 12 is a schematic diagram of a structure of a first auxiliary swing arm 51 according to an embodiment of this application, and FIG. 13 is a schematic diagram of a structure of a second auxiliary swing arm 52 according to an embodiment of this application. The folding assembly 100 further includes a first auxiliary swing arm 51 and a second auxiliary swing arm 52. The first auxiliary swing arm 51 and the second auxiliary swing arm 52 may be swing arm structures in various shapes. The first auxiliary swing arm 51 and the second auxiliary swing arm 52 may have the same or different shapes and structures. The first auxiliary swing arm 51 is rotatably connected to the seat 10, and the first auxiliary swing arm 51 is slidably connected to the first fixing member 21. The second auxiliary swing arm 52 is rotatably connected to the seat 10, and the second auxiliary swing arm 52 is slidably connected to the second fixing member 22. When the first fixing member 21 and the second fixing member 22 rotate relative to each other, the first fixing member 21 drives the first auxiliary swing arm 51 to rotate relative to the seat 10. In this process, the first auxiliary swing arm 51 and the first fixing member 21 can slide relative to each other. Therefore, the first main swing arm 31 and the first fixing member 21 are not susceptible to sticking during relative rotation therebetween. The second fixing member 22 drives the second auxiliary swing arm 52 to rotate relative to the seat 10. In this process, the second auxiliary swing arm 52 and the second fixing member 22 can slide relative to each other. Therefore, the second main swing arm 32 and the second fixing member 22 are not susceptible to sticking during relative rotation therebetween.

Optionally, a rotation axis along which the first main swing arm 31 is rotatably connected to the seat 10 does not coincide with a rotation axis along which the first auxiliary swing arm 51 is rotatably connected to the seat 10. In this way, when the first fixing member 21 drives the first main swing arm 31 and the first auxiliary swing arm 51 to rotate, relative sliding occurs between the first auxiliary swing arm 51 and the first fixing member 21. Similarly, a rotation axis along which the second main swing arm 32 is rotatably connected to the seat 10 does not coincide with a rotation axis along which the second auxiliary swing arm 52 is rotatably connected to the seat 10. In this way, when the second fixing member 22 drives the second main swing arm 32 and the second auxiliary swing arm 52 to rotate, relative sliding occurs between the second auxiliary swing arm 52 and the second fixing member 22.

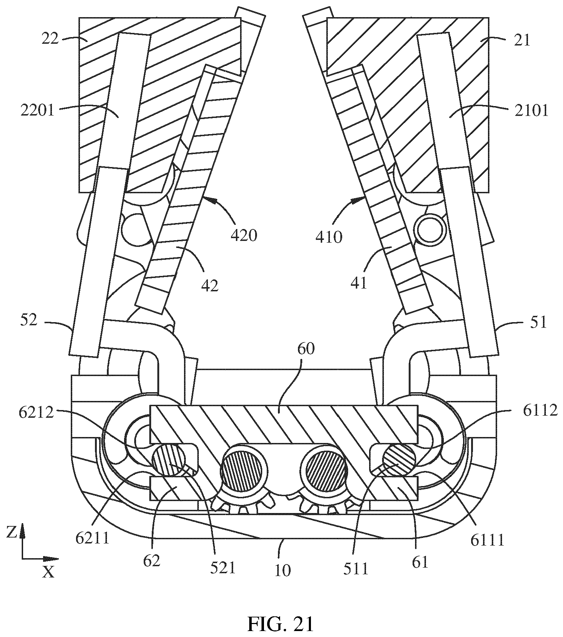

Optionally, referring to FIG. 9, FIG. 12, FIG. 20, and FIG. 21, FIG. 20 shows a case in which the first auxiliary swing arm 51 slidably fits the first fixing member 21 when the folding assembly 100 is in the unfolded state, and FIG. 21 shows a case in which the first auxiliary swing arm 51 slidably fits the first fixing member 21 when the folding assembly 100 is in the folded state. The first fixing member 21 may be provided with a first sliding space 2101. One end of the first auxiliary swing arm 51 extends into the first sliding space 2101 and slidably fits the first sliding space 2101. The first auxiliary swing arm 51 may directly slidably fit the first fixing member 21. Certainly, in some other cases, a first sliding member (not shown) may be arranged on the first auxiliary swing arm 51, and the first auxiliary swing arm 51 may slidably fit the first sliding space 2101 through the first sliding member.

Referring to FIG. 9, FIG. 13, FIG. 20, and FIG. 21, FIG. 20 further shows a case in which the second auxiliary swing arm 52 slidably fits the second fixing member 22 when the folding assembly 100 is in the unfolded state, and FIG. 21 further shows a case in which the second auxiliary swing arm 52 slidably fits the second fixing member 22 when the folding assembly 100 is in the folded state. The second fixing member 22 may be provided with a second sliding space 2201. One end of the second auxiliary swing arm 52 extends into the second sliding space 2201 and slidably fits the second sliding space 2201. The second auxiliary swing arm 52 may directly slidably fit the second fixing member 22. Certainly, in some other cases, a second sliding member (not shown) may be arranged on the second auxiliary swing arm 52, and the second auxiliary swing arm 52 may slidably fit the second sliding space 2201 through the second sliding member.

It should be noted that a manner in which the first auxiliary swing arm 51 is slidably connected to the first fixing member 21 and a manner in which the second main swing arm 32 is slidably connected to the second fixing member 22 are not limited thereto. Optionally, in some other embodiments, the first auxiliary swing arm 51 may be provided with a first sliding space, a first sliding member may be arranged on the first fixing member 21, and the first sliding member slidably fits the first sliding space, so that the first auxiliary swing arm 51 is slidably connected to the first fixing member 21. Similarly, the second auxiliary swing arm 52 may be provided with a second sliding space, a second sliding member may be arranged the second fixing member 22, and the second sliding member slidably fits the second sliding space, so that the second auxiliary swing arm 52 is slidably connected to the second fixing member 22.

Optionally, referring to FIG. 9 and FIG. 12, the first auxiliary swing arm 51 may be rotatably connected to the seat 10 by a third rotating shaft 83, and the third rotating shaft 83 may be formed separately from and connected to the first auxiliary swing arm 51 and the seat 10. Certainly, the third rotating shaft 83 may alternatively be an integrated structure integrally formed with one of the first auxiliary swing arm 51 and the seat 10, and be rotatably connected to the other.

Similarly, referring to FIG. 9 and FIG. 13, the second auxiliary swing arm 52 may be rotatably connected to the seat 10 by a fourth rotating shaft 84, and the fourth rotating shaft 84 may be formed separately from and connected to the second auxiliary swing arm 52 and the seat 10. Certainly, the fourth rotating shaft 84 may alternatively be an integrated structure integrally formed with one of the second auxiliary swing arm 52 and the seat 10, and be rotatably connected to the other.

Optionally, in some embodiments, referring to FIG. 9, the folding assembly 100 may further include a first gear 91 and a second gear 92. The first gear 91 is fixed to the first auxiliary swing arm 51. The first gear 91 may be directly or indirectly fixed to the first auxiliary swing arm 51. In some cases, the first gear 91 may be an integrated structure integrally formed with the first auxiliary swing arm 51. The second gear 92 may be fixed to the second auxiliary swing arm 52. The second gear 92 may be directly or indirectly fixed to the second auxiliary swing arm 52. In some cases, the second gear 92 may be an integrated structure integrally formed with the second auxiliary swing arm 52. The first gear 91 and the second gear 92 are in meshed transmission, so that when rotating relative to each other, the first auxiliary swing arm 51 and the second auxiliary swing arm 52 may be in meshed transmission through the first gear 91 and the second gear 92, thereby improving synchronization of relative rotations between the first fixing member 21 and the second fixing member 22.

Optionally, referring to FIG. 9, the folding assembly 100 may further include a third gear 93 and a fourth gear 94. The third gear 93 and the fourth gear 94 may be rotatably arranged on the seat 10 by a rotating shaft structure. The third gear 93 is meshed with the fourth gear 94, the third gear 93 is meshed with the first gear 91, and the fourth gear 94 is meshed with the second gear 92. In this way, when the first auxiliary swing arm 51 and the second auxiliary swing arm 52 rotate relative to each other, the first auxiliary swing arm 51 drives the first gear 91 to rotate, and the first gear 91 can be in meshed transmission with the second gear 92 through the third gear 93 and the fourth gear 94, so that the first fixing member 21 and the second fixing member 22 rotate synchronously and in opposite rotation directions.

The following describes a manner in which the first support member 41 is rotatably connected to the first fixing member 21 and a manner in which the second support member 42 is rotatably connected to the second fixing member 22.

In some embodiments, referring to FIG. 7 to FIG. 9 and FIG. 14, FIG. 14 is a schematic diagram of a structure of a first support member 41 according to an embodiment of this application. A third arc-shaped arm 412 is arranged on the first support member 41. The third arc-shaped arm 412 is a substantially circular arc-shaped structural body. A third arc-shaped groove 212 is provided on the first fixing member 21. The third arc-shaped groove 212 is a groove that is substantially circular arc-shaped. The third arc-shaped arm 412 slidably fits the third arc-shaped groove 212, to rotatably connect the first support member 41 to the first fixing member 21. Therefore, a rotation axis of the third arc-shaped arm 412 substantially coincides with a rotation axis of the third arc-shaped groove 212. When the third arc-shaped arm 412 slides in the third arc-shaped groove 212 along an arc-shaped track of the third arc-shaped groove 212, the third arc-shaped arm 412 rotates relative to the first fixing member 21. In this case, it can be considered that the first support member 41 is rotatably connected to the first fixing member 21 by an imaginary shaft, which helps a rotation axis along which the first support member 41 is rotatably connected to the first fixing member 21 to be approximately located on the foldable screen 2000, which can improve a support effect of the first support member 41 for the foldable screen 2000 and reduce a possibility of causing damage to the foldable screen 2000.

Similarly, referring to FIG. 7 to FIG. 9 and FIG. 15, FIG. 15 is a schematic diagram of a structure of a second support member 42 according to an embodiment of this application. A fourth arc-shaped arm 422 is arranged on the second support member 42, and a fourth arc-shaped groove 222 is provided on the second fixing member 22. The fourth arc-shaped arm 422 slidably fits the fourth arc-shaped groove 222, to rotatably connect the second support member 42 to the second fixing member 22. Therefore, a rotation axis of the fourth arc-shaped arm 422 substantially coincides with a rotation axis of the fourth arc-shaped groove 222. When the fourth arc-shaped arm 422 slides in the fourth arc-shaped groove 222 along an arc-shaped track of the fourth arc-shaped groove 222, the fourth arc-shaped arm 422 rotates relative to the second fixing member 22. In this case, it can be considered that the second support member 42 is rotatably connected to the second fixing member 22 by an imaginary shaft, which helps a rotation axis along which the second support member 42 is rotatably connected to the second fixing member 22 to be approximately located on the foldable screen 2000, which can improve a support effect of the second support member 42 for the foldable screen 2000 and reduce a possibility of causing damage to the foldable screen 2000.

Optionally, in some embodiments, referring to FIG. 7 to FIG. 9, the third arc-shaped groove 212 may be arranged at an end of the first fixing member 21 along a length direction (that is, the Y-axis direction) of the first fixing member 21, and the fourth arc-shaped groove 222 may be arranged at an end of the second fixing member 22 along a length direction (that is, the Y-axis direction) of the second fixing member 22.

Optionally, the first support surface 410 is arranged facing away from the first main swing arm 31, and the second support surface 420 is arranged facing away from the second main swing arm 32. The third arc-shaped arm 412 may be arranged on a side of the first support member 41 facing the first fixing member 21, that is, a side facing away from the first support surface 410. The fourth arc-shaped arm 422 may be arranged on a side of the second support member 42 facing the second fixing member 22, that is, a side facing away from the second support surface 420.

It may be understood that, in some other embodiments, positions of the third arc-shaped arm 412 and the third arc-shaped groove 212 can be swapped. That is, the third arc-shaped groove 212 may be provided on the first support member 41, and the third arc-shaped arm 412 may be arranged on the first fixing member 21, so that the first support member 41 can also be rotatably connected to the first fixing member 21. Similarly, positions of the fourth arc-shaped arm 422 and the fourth arc-shaped groove 222 can be swapped. That is, the fourth arc-shaped groove 222 may be provided on the second support member 42, and the fourth arc-shaped arm 422 may be arranged on the second fixing member 22.

It should be noted that the first support member 41 and the first fixing member 21 are not limited to being rotatably connected by an imaginary shaft. In some other possible embodiments, the first support member 41 and the first fixing member 21 may alternatively be rotatably connected by a shaft or a pin. The second support member 42 and the second fixing member 22 are not limited to being rotatably connected by an imaginary shaft. In some other possible embodiments, the second support member 42 and the second fixing member 22 may alternatively be rotatably connected by a shaft or a pin.

In some embodiments, referring to FIG. 9, the seat 10 includes a shaft cover 15 and a base 16. The shaft cover 15 is substantially in a cover shape or a shell shape. The shaft cover 15 includes an accommodating space 150 and an opening in communication with the accommodating space 150. The base 16 is arranged in the accommodating space 150. The base 16 may be a structure in a plurality of shapes, for example, a blocky structure, a plate-shaped structure, or a frame structure in a regular or irregular shape, but is not limited thereto. The first main swing arm 31 and the second main swing arm 32 may be rotatably connected to the base 16. In this way, the base 16, a joint between the first main swing arm 31 and the base 16, and a joint between the second main swing arm 32 and the base 16 can be protected by the shaft cover 15, to improve reliability.

Optionally, parts of the first auxiliary swing arm 51 and the second auxiliary swing arm 52 rotatably connected to the seat 10 may be located in the shaft cover 15, to facilitate protection by the shaft cover 15. The first auxiliary swing arm 51 and the second auxiliary swing arm 52 may be rotatably connected to the base 16 or the shaft cover 15. Optionally, the first gear 91, the second gear 92, the third gear 93, and the fourth gear 94 may be arranged in the shaft cover 15, to facilitate protection by the shaft cover 15.

A manner in which the first support member 41 is slidably and rotatably connected to the first main swing arm 31 and a manner in which the second support member 42 is slidably and rotatably connected to the second main swing arm 32 are described below.

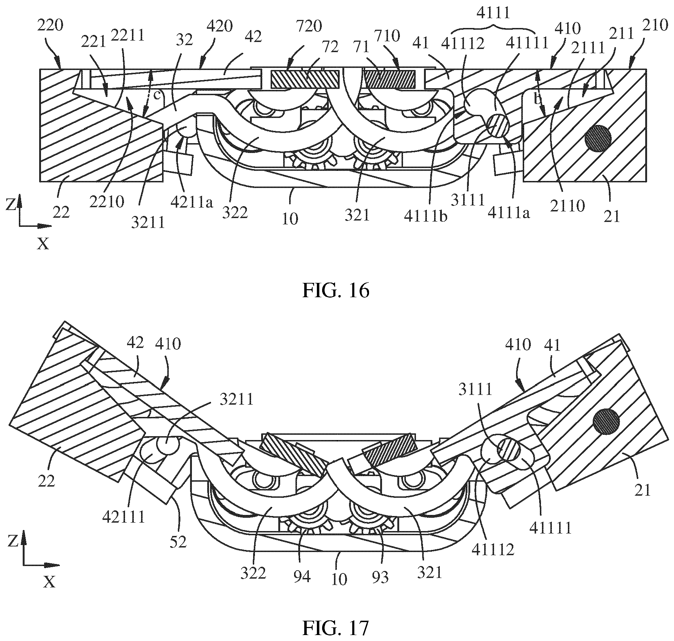

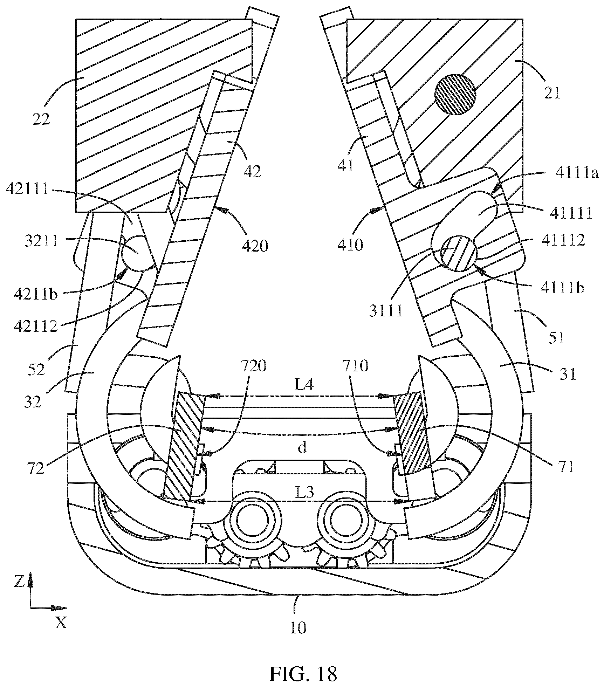

Referring to FIG. 16 to FIG. 18, FIG. 16 is a schematic cross-sectional view of a folding assembly 100 in an unfolded state according to some embodiments of this application, FIG. 17 is a schematic cross-sectional view of a folding assembly 100 in an intermediate state between an unfolded state and a folded state according to some embodiments of this application, and FIG. 18 is a schematic cross-sectional view of a folding assembly 100 in a folded state according to some embodiments of this application.

In some embodiments, referring to FIG. 10, FIG. 14, and FIG. 16, a first sliding portion 411 is arranged on the first support member 41, and a first sliding fitting portion 311 is arranged on the first main swing arm 31. The first sliding portion 411 includes a first track groove 4111. The first sliding portion 411 may be a structure in a plurality of shapes, such as a plate-shaped structure, a sheet-shaped structure, or a blocky structure, but is not limited thereto, provided that the first sliding portion 411 is a structure on which the first track groove 4111 can be provided. The first track groove 4111 may be a through groove running through two opposite sides of the first sliding portion 411 along the length direction (that is, the Y-axis direction) of the first support member 41, or certainly, may be a blind groove not running through the two opposite sides of the first sliding portion 411. The first sliding fitting portion 311 includes a first sliding body 3111. The first sliding body 3111 may be a part or all of the first sliding fitting portion 311. The first sliding body 3111 may be a structure in a plurality of shapes, such as a shaft structure, a pin structure, a rod structure, a block structure, or a strip structure, but is not limited thereto, provided that the first sliding body 3111 is a structural body that can slide in the first track groove 4111. The first sliding body 3111 slidably fits the first track groove 4111, that is, the first sliding body 3111 can slide in the first track groove 4111 along a track of the first track groove 4111, so that the first main swing arm 31 and the first support member 41 can slide and rotate relative to each other.

Similarly, referring to FIG. 11, FIG. 15, and FIG. 16, a second sliding portion 421 is arranged on the second support member 42, and a second sliding fitting portion 321 is arranged on the second main swing arm 32. The second sliding portion 421 includes a second track groove 4211. The second sliding portion 421 may be a structure in a plurality of shapes, such as a plate-shaped structure, a sheet-shaped structure, or a blocky structure, but is not limited thereto, provided that the second sliding portion 421 is a structure on which the second track groove 4211 can be provided. The second track groove 4211 may be a through groove running through two opposite sides of the second sliding portion 421 along the length direction (that is, the Y-axis direction) of the second support member 42, or certainly, may be a blind groove not running through the two opposite sides of the second sliding portion 421. The second sliding fitting portion 321 includes a second sliding body 3211. The second sliding body 3211 may be a part or all of the second sliding fitting portion 321. The second sliding body 3211 may be a structure in a plurality of shapes, such as a shaft structure, a pin structure, a rod structure, a block structure, or a strip structure, but is not limited thereto, provided that the second sliding body 3211 is a structural body that can slide in the second track groove 4211. The second sliding body 3211 slidably fits the second track groove 4211, that is, the second sliding body 3211 can slide in the second track groove 4211 along a track of the second track groove 4211, so that the second main swing arm 32 and the second support member 42 can slide and rotate relative to each other.

In some cases, referring to FIG. 16, when the folding assembly 100 is in the unfolded state, the first sliding body 3111 may be located at a first end 4111a of the first track groove 4111, and the second sliding body 3211 may be located at a third end 4211a of the second track groove 4211. When the folding assembly 100 is in the folded state, referring to FIG. 18, the first sliding body 3111 may be located at a second end 4111b of the first track groove 4111, and the second sliding body 3211 may be located at a fourth end 4211b of the second track groove 4211. The second end 4111b may be an other end of the first track groove 4111 away from the first end 4111a, and the fourth end 4211b may be an other end of the second track groove 4211 away from the third end 4211a.

When the folding assembly 100 is switched from the unfolded state to the folded state, referring to FIG. 16 to FIG. 18 in sequence, the first fixing member 21 drives the first main swing arm 31 to rotate. In this process, the first main swing arm 31 and the first fixing member 21 rotate relative to each other, the first main swing arm 31 drives the first support member 41 through the first sliding body 3111 to move, the first sliding body 3111 slides in the first track groove 4111 along the track of the first track groove 4111 from the first end 4111a to the second end 4111b, and the first support member 41 and the first main swing arm 31 rotate relative to each other. The second fixing member 22 drives the second main swing arm 32 to rotate. In this process, the second main swing arm 32 and the second fixing member 22 rotate relative to each other, the second main swing arm 32 drives the second support member 42 through the second sliding body 3211 to move, the second sliding body 3211 slides in the second track groove 4211 along the track of the second track groove 4211 from the third end 4211a to the fourth end 4211b, and the second support member 42 and the second main swing arm 32 rotate relative to each other.

It should be noted that in some other embodiments, alternatively, the first sliding portion 411 may include a first sliding body 3111, and the first sliding fitting portion 311 includes a first track groove 4111. Similarly, alternatively, the second sliding portion 421 may include a second sliding body 3211, and the second sliding fitting portion 321 includes a second track groove 4211.

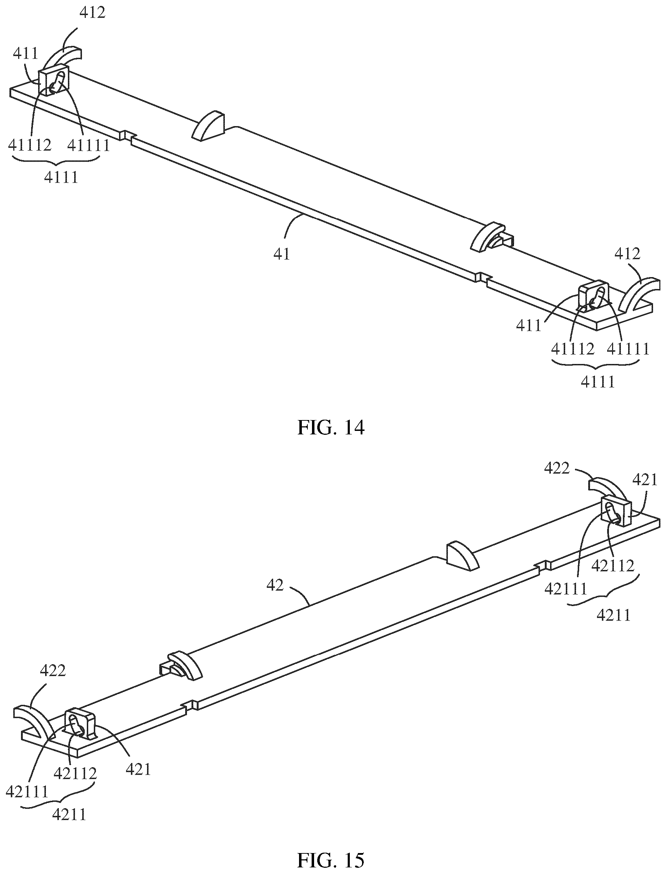

Optionally, in some embodiments, referring to FIG. 14 and FIG. 16 to FIG. 18, the first track groove 4111 includes a first slide groove 41111 and a second slide groove 41112. The second slide groove 41112 is located on a side of the first slide groove 41111 and is in communication with the first slide groove 41111. Therefore, a shape formed by combining the first slide groove 41111 and the second slide groove 41112 is a non-circular arc and non-linear shape, that is, an irregular shape, for example, may be a bent shape. When the folding assembly 100 is in the unfolded state, the first sliding body 3111 is located in the first slide groove 41111, for example, as shown in FIG. 16. When the folding assembly 100 is in the folded state, the first sliding body 3111 is located in the second slide groove 41112, for example, as shown in FIG. 18.

Similarly, referring to FIG. 15 and FIG. 16 to FIG. 18, the second track groove 4211 includes a third slide groove 42111 and a fourth slide groove 42112. The fourth slide groove 42112 is located on a side of the third slide groove 42111 and is in communication with the third slide groove 42111. Therefore, a shape formed by combining the third slide groove 42111 and the fourth slide groove 42112 is a non-circular arc and non-linear shape, that is, an irregular shape, for example, may be a bent shape. When the folding assembly 100 is in the unfolded state, the second sliding body 3211 is located in the third slide groove 42111. When the folding assembly 100 is in the folded state, the second sliding body 3211 is located in the fourth slide groove 42112.

In this way, because the second slide groove 41112 is located on a side of the first slide groove 41111, and the second slide groove 41112 and the first slide groove 41111 are combined to form a non-circular arc and a non-linear groove, when the first support member 41 and the first main swing arm 31 slide and rotate relative to each other, a movement track of the first sliding body 3111 can be better adapted to without restricting the first sliding body 3111 to always slide in the first track groove 4111 along a circular arc or linear track, that is, the first sliding body 3111 is allowed to turn or make a turn in the first track groove 4111, which helps the first support member 41 and the first main swing arm 31 to move relatively at a uniform speed. Because the fourth slide groove 42112 is located on a side of the third slide groove 42111, and the fourth slide groove 42112 and the third slide groove 42111 are combined to form a non-circular arc and a non-linear groove, when the second support member 42 and the second main swing arm 32 slide and rotate relative to each other, a movement track of the second sliding body 3211 can be better adapted to without restricting the second sliding body 3211 to always slide in the second track groove 4211 along a circular arc or linear track, that is, the second sliding body 3211 is allowed to turn or make a turn in the second track groove 4211, which helps the second support member 42 and the second main swing arm 32 to move relatively at a uniform speed. Further, uniformity of applying forces to the foldable part 2100 of the foldable screen 2000 by the first support member 41 and the second support member 42 can be improved, thereby reducing a possibility that the foldable screen 2000 is wrinkled or squeezed and arched due to uneven forces.

However, if the first track groove 4111 and the second track groove 4211 are set to a circular arc shape or a linear shape, when the first support member 41 slides and rotates relative to the first main swing arm 31, the first sliding body 3111 needs to always slide in the first track groove 4111 along the circular arc shape or the linear shape, and when the second support member 42 slides and rotates relative to the second main swing arm 32, the second sliding body 3211 needs to always slide in the second track groove 4211 along the circular arc shape or the linear shape. As a result, during movement, a relative movement speed between the first support member 41 and the first main swing arm 31 changes, and a relative movement speed between the second support member 42 and the second main swing arm 32 changes. Therefore, during movement, rotation angles of the first support member 41 and the second support member 42 may change suddenly. Consequently, forces applied by the first support member 41 and the second support member 42 to the foldable part 2100 of the foldable screen 2000 change suddenly and are uneven, which may cause the foldable screen 2000 to wrinkle or squeeze and arch due to the uneven forces. The foregoing technical solutions in embodiments of this application can better alleviate the problem.

Optionally, the first end 4111a of the first track groove 4111 may be an end of the first slide groove 41111 away from the second slide groove 41112, and the second end 4111b of the first track groove 4111 may be an end of the second slide groove 41112 away from the first slide groove 41111. Similarly, the third end 4211a of the second track groove 4211 may be an end of the third slide groove 42111 away from the fourth slide groove 42112, and the fourth end 4211b of the second track groove 4211 may be an end of the fourth slide groove 42112 away from the first slide groove 41111.

Optionally, referring to FIG. 16, when the folding assembly 100 is in the unfolded state, the second slide groove 41112 is located on a side of the first slide groove 41111 facing the seat 10, and the fourth slide groove 42112 is located on a side of the third slide groove 42111 facing the seat 10.

Through such arrangements, when the folding assembly 100 is switched from the unfolded state to the folded state, referring to FIG. 16 to FIG. 18, the first sliding body 3111 transitions from the first slide groove 41111 away from the seat 10 to the second slide groove 41112 close to the seat 10, which is conducive to enabling a side of the first support member 41 close to the seat 10 to move away from the seat 10 along the X-axis direction and away from the seat 10 along the Z-axis direction. The second sliding body 3211 transitions from the third slide groove 42111 away from the seat 10 to the fourth slide groove 42112 close to the seat 10, which is conducive to enabling a side of the second support member 42 close to the seat 10 to move away from the seat 10 along the X-axis direction and away from the seat 10 along the Z-axis direction. Therefore, it helps the first support surface 410 and the second support surface 420 to form an angle a when the folding assembly 100 is in the folded state, and helps the first support member 41 and the second support member 42 to remain in an angled state.

Optionally, referring to FIG. 14 to FIG. 16, a length of the first slide groove 41111 is greater than a length of the second slide groove 41112, and a length of the third slide groove 42111 is greater than a length of the fourth slide groove 42112. The length of the first slide groove 41111 is a length of a track along which the first slide groove 41111 allows the first sliding body 3111 to slide, and may be considered as a distance between two opposite endpoints of the first slide groove 41111. The length of the second slide groove 41112 is a length of a track along which the second slide groove 41112 allows the first sliding body 3111 to slide, and may be considered as a distance between two opposite endpoints of the second slide groove 41112. Similarly, the length of the third slide groove 42111 is a length of a track along which the third slide groove 42111 allows the second sliding body 3211 to slide, and may be considered as a distance between two opposite endpoints of the third slide groove 42111. The length of the fourth slide groove 42112 is a length of a track along which the fourth slide groove 42112 allows the second sliding body 3211 to slide, and may be considered as a distance between two opposite endpoints of the fourth slide groove 42112.

Through such arrangements, when the folding assembly 100 is switched from the unfolded state to the folded state, the first sliding body 3111 is allowed to first move along a first movement track (that is, a track of the first slide groove 41111) by a distance in the first track groove 4111, and then turn or make a turn to move along a second movement track (that is, a track of the second slide groove 41112). A length of the first movement track is greater than a length of the second movement track. The second sliding body 3211 is allowed to first move along a third movement track (that is, a track of the third slide groove 42111) by a distance in the second track groove 4211, and then turn or make a turn to move along a fourth movement track (that is, a track of the fourth slide groove 42112). A length of the third movement track is greater than a length of the fourth movement track. Therefore, it helps the first support member 41 and the first main swing arm 31 to move relatively at a uniform speed, helps the second support member 42 and the second main swing arm 32 to move relatively at a uniform speed, and helps, when the folding assembly 100 is in the folded state, the first support member 41 and the second support member 42 to smoothly rotate, to enable the first support surface 410 and the second support surface 420 to form the angle a.

It should be noted that a length relationship between the first slide groove 41111 and the second slide groove 41112 is not limited thereto, and may be set according to a requirement of an actual movement track of the first support member 41 relative to the first main swing arm 31. A length relationship between the third slide groove 42111 and the fourth slide groove 42112 is not limited thereto, and may be set according to a requirement of an actual movement track of the second support member 42 relative to the second main swing arm 32.

Optionally, referring to FIG. 14 and FIG. 16, the first slide groove 41111 and the second slide groove 41112 form an L shape, that is, substantially form an L shape, rather than being limited to an absolute L shape, which helps the first sliding body 3111 to turn or make a turn into the second slide groove 41112 when moving from one end of the first slide groove 41111 to an other end thereof, and further helps the first support member 41 to tilt to the seat 10 when smoothly rotating to the folded state, so that the first support surface 410 can form the angle a with the second support surface 420. Referring to FIG. 15 to FIG. 18, the third slide groove 42111 and the fourth slide groove 42112 form an L shape, that is, substantially form an L shape, rather than being limited to an absolute L shape, which helps the second sliding body 3211 to turn or make a turn into the fourth slide groove 42112 when moving from one end of the third slide groove 42111 to an other end thereof, and further helps the second support member 42 to tilt to the seat 10 when smoothly rotating to the folded state, so that the second support surface 420 can form the angle a with the first support surface 410.

It should be noted that a shape formed by combining the first slide groove 41111 and the second slide groove 41112 is not limited to the L shape, and may be set according to a requirement of an actual movement track of the first support member 41 relative to the first main swing arm 31. A shape formed by combining the third slide groove 42111 and the fourth slide groove 42112 is not limited to the L shape, and may be set according to a requirement of an actual movement track of the second support member 42 relative to the second main swing arm 32.

Optionally, in some embodiments, referring to FIG. 9, FIG. 10, and FIG. 16, the first sliding portion 411 is located on a side of the first support member 41 facing the first main swing arm 31. In a direction (that is, the Y-axis direction) of a rotation axis along which the first main swing arm 31 is rotatably connected to the seat 10, the first main swing arm 31 and the first sliding portion 411 are sequentially arranged, that is, the first main swing arm 31 and the first sliding portion 411 are relatively staggered, rather than located at a same position. The first sliding fitting portion 311 is located on a side of the first main swing arm 31 facing the first sliding portion 411.

Similarly, referring to FIG. 9, FIG. 11, and FIG. 16, the second sliding portion 421 is located on a side of the second support member 42 facing the second main swing arm 32. In a direction (that is, the Y-axis direction) of a rotation axis along which the second main swing arm 32 is rotatably connected to the seat 10, the second main swing arm 32 and the second sliding portion 421 are sequentially arranged, that is, the second main swing arm 32 and the second sliding portion 421 are staggered, rather than located at a same position. The second sliding fitting portion 321 is located on a side of the second main swing arm 32 facing the second sliding portion 421.

Through such arrangements, compared with that along the Y-axis direction, the first main swing arm 31 and the first sliding portion 411 are at a same position, and the second main swing arm 32 and the second sliding portion 421 are at a same position, that the first main swing arm 31 and the first sliding portion 411 are staggered along the Y-axis direction is conducive to distributing the thickness along the Y-axis direction and reducing the overall thickness of the folding assembly 100 along the Z-axis direction, thereby facilitating a light and thin design of the folding assembly 100 and the terminal device 10000.

A fitting relationship between the first support member 41 and the first fixing member 21 and a fitting relationship between the second support member 42 and the second fixing member 22 are further described below in detail.

In some embodiments, referring to FIG. 9 and FIG. 16, the first fixing member 21 is provided with a first groove 211, and the first groove 211 runs through a side of the first fixing member 21 facing the seat 10. In a direction (that is, the Y-axis direction) of a rotation axis along which the first main swing arm 31 is rotatably connected to the seat 10, the first groove 211 runs through two opposite ends of the first fixing member 21. The first support member 41 is at least partially located in the first groove 211, that is, the first support member 41 may be partially or completely located in the first groove 211.

Similarly, referring to FIG. 9 and FIG. 16, the second fixing member 22 is provided with a second groove 221, and the second groove 221 runs through a side of the second fixing member 22 facing the seat 10. In a direction (that is, the Y-axis direction) of a rotation axis along which the second main swing arm 32 is rotatably connected to the seat 10, the second groove 221 runs through two opposite ends of the second fixing member 22. The second support member 42 is at least partially located in the second groove 221, that is, the second support member 42 may be partially or completely located in the second groove 221.

Through such arrangements, the first groove 211 can avoid at least a part of the first support member 41, and the second groove 221 can avoid at least a part of the second support member 42, which can improve the structural compactness and help to reduce the overall thickness of the folding assembly 100 in the Z-axis direction, thereby facilitating a light and thin design of the folding assembly 100 and the terminal device 10000. In addition, an inner wall of the first groove 211 can also limit the first support member 41, to restrict the first support member 41 to move facing away from the seat 10 along the X-axis direction, and an inner wall of the second groove 221 can also limit the second support member 42, to restrict the second support member 42 to move facing away from the seat 10 along the X-axis direction, which helps to improve stability of fitting between the first support member 41 and the first fixing member 21 and helps to improve stability of fitting between the second support member 42 and the second fixing member 22, thereby reducing a possibility of damage to the foldable screen 2000 caused by the first support member 41 and the second support member 42 applying forces to the foldable screen 2000 due to displacement, and improving stability of supporting the foldable screen 2000 by the first support member 41 and the second support member 42.

Optionally, in some embodiments, referring to FIG. 9 and FIG. 16, the first groove 211 includes a first inner bottom surface 2111. The first inner bottom surface 2111 is arranged opposite to the first support member 41. When the folding assembly 100 is in the unfolded state, the first inner bottom surface 2111 and the first support surface 410 form an angle b, that is, the first inner bottom surface 2111 is inclined relative to the first support surface 410. A first gap 2110 is formed between the first inner bottom surface 2111 and the first support member 41. In this way, during relative rotation between the first support member 41 and the first main swing arm 31 and during relative rotation between the first support member 41 and the first fixing member 21, the first gap 2110 can avoid the first support member 41, which effectively reduces a possibility that the first support member 41 and the first fixing member 21 interfere with each other.

Similarly, referring to FIG. 9 and FIG. 16, the second groove 221 includes a second inner bottom surface 2211. The second inner bottom surface 2211 is arranged opposite to the second support member 42. When the folding assembly 100 is in the unfolded state, the second inner bottom surface 2211 and the second support surface 420 form an angle c, and a second gap 2210 is formed between the second inner bottom surface 2211 and the second support member 42. In this way, during relative rotation between the second support member 42 and the second main swing arm 32 and during relative rotation between the second support member 42 and the second fixing member 22, the second gap 2210 can avoid the second support member 42, which effectively reduces a possibility that the second support member 42 and the second fixing member 22 interfere with each other.

Optionally, in some embodiments, referring to FIG. 6, FIG. 9, and FIG. 16, the first fixing member 21 includes a third support surface 210. The third support surface 210 is located on a side of the first groove 211 facing away from the seat 10. When the folding assembly 100 is in the unfolded state, the third support surface 210 is flush with the first support surface 410 and/or the second support surface 420 (a tolerance should be allowed). The third support surface 210 is configured to support the foldable screen 2000.

Similarly, referring to FIG. 6, FIG. 9, and FIG. 16, the second fixing member 22 includes a fourth support surface 220. The fourth support surface 220 is located on a side of the second groove 221 facing away from the seat 10. When the folding assembly 100 is in the unfolded state, the fourth support surface 220 is flush with the second support surface 420 and/or the first support surface 410 (a tolerance should be allowed). The fourth support surface 220 is configured to support the foldable screen 2000.

Through such arrangements, the arrangements of the third support surface 210 and the fourth support surface 220 help to increase a support area for the foldable screen 2000, thereby improving flatness of the foldable screen 2000 in the unfolded state. In addition, by adding a support surface on another component different from the first support surface 410 and the second support surface 420, structural strength and support stability are higher, which can avoid that some positions of a support surface have low strength and are susceptible to deformation because the support surface is increased on a same component.

A fitting relationship between the first support member 41 and the seat 10 and a fitting relationship between the second support member 42 and the seat 10 are described below.

In some embodiments, referring to FIG. 7 and FIG. 9, the seat 10 includes a first support portion 111. The first support portion 111 is configured to support the first support member 41 when the folding assembly 100 is in the unfolded state. The first support portion 111 may be a structure in various shapes, such as a surface structure or a protruding structure, but is not limited thereto.

Similarly, referring to FIG. 7 and FIG. 9, the seat 10 includes a second support portion 121. The second support portion 121 is configured to support the second support member 42 when the folding assembly 100 is in the unfolded state. The second support portion 121 may be a structure in various shapes, such as a surface structure or a protruding structure, but is not limited thereto.

Through such arrangements, when the folding assembly 100 is in the unfolded state, the first support portion 111 supports the first support member 41, and the second support portion 121 supports the second support member 42, which can reduce a possibility that the first support member 41 and the second support member 42 tilt or swing toward the seat 10, thereby improving flatness of the foldable screen 2000 supported on the first support surface 410 and the second support surface 420.

Optionally, in some embodiments, referring to FIG. 7 and FIG. 9, the seat 10 is provided with a first limiting groove 11. When the folding assembly 100 is in an unfolded state, the first support member 41 extends into the first limiting groove 11. An inner bottom wall of the first limiting groove 11 includes a first support portion 111. The first support portion 111 is a surface structure, and the first support portion 111 may be a part or all of the inner bottom wall of the first limiting groove 11.

Similarly, referring to FIG. 7 and FIG. 9, the seat 10 is provided with a second limiting groove 12. When the folding assembly 100 is in the unfolded state, the second support member 42 extends into the second limiting groove 12. An inner bottom wall of the second limiting groove 12 includes a second support portion 121. The second support portion 121 is a surface structure, and the second support portion 121 may be a part or all of the inner bottom wall of the second limiting groove 12.

Through such arrangements, when the folding assembly 100 is in the unfolded state, the inner bottom wall of the first limiting groove 11 can be configured to support the first support member 41, and the inner bottom wall of the second limiting groove 12 can be configured to support the second support member 42, which are surface supports providing more stable support. In addition, an inner wall of the first limiting groove 11 can also limit the first support member 41, to restrict the first support member 41 along the X-axis direction, and an inner wall of the second limiting groove 12 can also limit the second support member 42, to restrict the second support member 42 to move along the X-axis direction, which helps to improve stability of the first support member 41 and the second support member 42 in the unfolded state, thereby reducing a possibility of damage to the foldable screen 2000 caused by the first support member 41 and the second support member 42 applying forces to the foldable screen 2000 due to displacement, and improving stability of supporting the foldable screen 2000 by the first support member 41 and the second support member 42.

Optionally, at least one of two ends of the bottom seat 10 along the length direction (that is, the Y-axis direction) of the bottom seat 10 is provided with the first limiting groove 11 and the second limiting groove 12. Specifically, at least one of two ends of the shaft cover 15 of the bottom seat 10 along the length direction (that is, the Y-axis direction) of the shaft cover 15 is provided with the first limiting groove 11 and the second limiting groove 12. Certainly, in some other embodiments, alternatively, the base 16 of the seat 10 may be provided with the first limiting groove 11 and the second limiting groove 12.

Optionally, referring to FIG. 6, FIG. 7, and FIG. 9, the seat 10 includes a fifth support surface 101. The fifth support surface 101 is located between the first limiting groove 11 and the second limiting groove 12. When the folding assembly 100 is in the unfolded state, the fifth support surface 101 is flush with the first support surface 410 and/or the second support surface 420 (a tolerance should be allowed). The fifth support surface 101 is configured to support the foldable screen 2000.

Such arrangements help to increase a support area for the foldable screen 2000, thereby improving flatness of the foldable screen 2000 in the unfolded state. In addition, by adding a support surface on another component different from the first support surface 410 and the second support surface 420, structural strength and support stability are higher, which can avoid that some positions of a support surface are susceptible to deformation because the support surface is increased on a same component. Because the fifth support surface 101 is located between the first limiting groove 11 and the second limiting groove 12, it is convenient to directly arrange the fifth support surface 101 on the seat 10 between the first limiting groove 11 and the second limiting groove 12. There is no need to additionally arrange the fifth support surface 101 at another position of the seat 10, so that the seat 10 can be fully utilized, and the structural compactness is improved.

Optionally, at least one of two ends of the shaft cover 15 along the length direction (that is, the Y-axis direction) of the shaft cover 15 is provided with the first limiting groove 11 and the second limiting groove 12. The shaft cover 15 includes the fifth support surface 101.

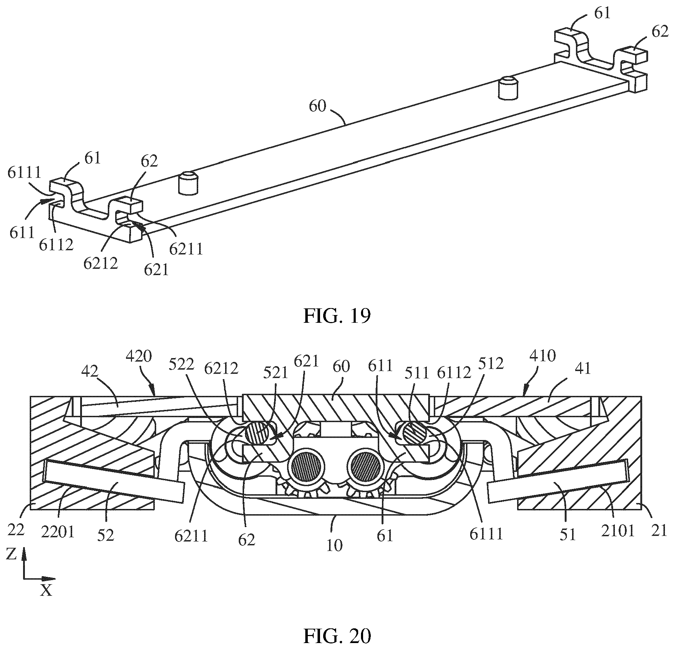

To further increase a space for accommodating the foldable part 2100 of the foldable screen 2000, in some embodiments, referring to FIG. 6 and FIG. 9 and FIG. 19 to FIG. 21, FIG. 19 is a schematic diagram of a structure of a door plate 60 according to some embodiments of this application, FIG. 20 is another schematic cross-sectional view of a folding assembly 100 in an unfolded state according to some embodiments of this application, and FIG. 21 is another schematic cross-sectional view of a folding assembly 100 in a folded state according to some embodiments of this application. The folding assembly 100 further includes a door plate 60. When the folding assembly 100 is in the unfolded state, the door plate 60 is located between the first support member 41 and the second support member 42. A first fitting portion 61 and a second fitting portion 62 are arranged on the door plate 60. A first pushing portion 511 is arranged on the first auxiliary swing arm 51, and a second pushing portion 521 is arranged on the second auxiliary swing arm 52. When the folding assembly 100 is switched from the unfolded state to the folded state, the first pushing portion 511 abuts against a first part 6111 of the first fitting portion 61, and the second pushing portion 521 abuts against a second part 6211 of the second fitting portion 62, to push the door plate 60 to move toward the seat 10, to leave a space for accommodating the foldable part 2100 on a side of the door plate 60 facing away from the seat 10, thereby further reducing a possibility wrinkling or squeezing and arching of the foldable part 2100. When the folding assembly 100 is switched from the folded state to the unfolded state, the first pushing portion 511 abuts against a third part 6112 of the first fitting portion 61, and the second pushing portion 521 abuts against a fourth part 6212 of the second fitting portion 62, to push the door plate 60 to move away from the seat 10, which helps the door plate 60 to support the foldable part 2100. When the folding assembly 100 is in the unfolded state, a surface of a side of the door plate 60 facing away from the seat 10 may be substantially flush with the first support surface 410 and the second support surface 420 (a tolerance should be allowed).

It may be understood that the first fitting portion 61 and the second fitting portion 62 may be structures in various shapes, such as hook-shaped structures, half-ring structures, annular structures, or structural bodies in various shapes provided with grooves or holes, but are not limited thereto. The first part 6111 and the third part 6112 are parts of the first fitting portion 61, and may be structures in various shapes, such as surface structures or protruding structures, but are not limited thereto. The second part 6211 and the fourth part 6212 are parts of the second fitting portion 62, and may be structures in various shapes, such as surface structures or protruding structures, but are not limited thereto.

Optionally, in some embodiments, referring to FIG. 20 and FIG. 21, the first fitting portion 61 and the second fitting portion 62 are located on a side of the door plate 60 facing the seat 10. The first fitting portion 61 is provided with a first fitting groove 611. An inner wall of the first fitting groove 611 includes a first part 6111 and a third part 6112. The first part 6111 and the third part 6112 are surface structures, and the first part 6111 and the third part 6112 are arranged opposite to each other. The second fitting portion 62 is provided with a second fitting groove 621. An inner wall of the second fitting groove 621 includes a second part 6211 and a fourth part 6212. The second part 6211 and the fourth part 6212 are surface structures, and the second part 6211 and the fourth part 6212 are arranged opposite to each other.

The first auxiliary swing arm 51 is located on a side of the first fitting portion 61. Projections of the first auxiliary swing arm 51 and the first fitting portion 61 along a direction of the rotation axis (that is, the Y-axis direction) of the first auxiliary swing arm 51 at least partially overlap, that is, may partially or completely overlap. The first pushing portion 511 is located on a side of the first auxiliary swing arm 51 facing the first fitting portion 61. The first pushing portion 511 deviates from the rotation axis of the first auxiliary swing arm 51. That is, the first pushing portion 511 is not on the rotation axis of the first auxiliary swing arm 51, that is, is arranged eccentrically. The first pushing portion 511 is partially or completely located in the first fitting groove 611.

The second auxiliary swing arm 52 is located on a side of the second fitting portion 62. Projections of the second auxiliary swing arm 52 and the second fitting portion 62 along a direction of the rotation axis (that is, the Y-axis direction) of the second auxiliary swing arm 52 at least partially overlap, that is, may partially or completely overlap. The second pushing portion 521 is located on a side of the second auxiliary swing arm 52 facing the second fitting portion 62. The second pushing portion 521 deviates from the rotation axis of the second auxiliary swing arm 52. That is, the second pushing portion 521 is not on the rotation axis of the second auxiliary swing arm 52, that is, is arranged eccentrically. The second pushing portion 521 is partially or completely located in the second fitting groove 621.

Through such arrangements, because the projections of the first auxiliary swing arm 51 and the first fitting portion 61 in the Y-axis direction at least partially overlap, compactness of the first auxiliary swing arm 51 and the first fitting portion 61 in the width direction (that is, the X-axis direction) of the seat 10 can be improved. Projections of the second auxiliary swing arm 52 and the second fitting portion 62 in the Y-axis direction at least partially overlap, which can improve compactness of the first auxiliary swing arm 51 and the first fitting portion 61 in the width direction (that is, the X-axis direction) of the seat 10, thereby helping to reduce a size of the folding assembly 100 in the width direction, and facilitating miniaturization of the folding assembly 100. In addition, because the first pushing portion 511 deviates from the rotation axis of the first auxiliary swing arm 51, when the first auxiliary swing arm 51 rotates, the first pushing portion 511 is driven to rotate, so that the first pushing portion 511 can push the door plate 60 to move. Because the second pushing portion 521 deviates from the rotation axis of the second auxiliary swing arm 52, when the second auxiliary swing arm 52 rotates, the second pushing portion 521 is driven to rotate, and the second pushing portion 521 can push the door plate 60 to move.

It may be understood that the first pushing portion 511 and the second pushing portion 521 may be structures in various shapes, such as shaft structures, rod structures, strip structures, or the like, but are not limited thereto, provided that the first pushing portion 511 and the second pushing portion 521 are structures that can push an object to move.

Optionally, referring to FIG. 12 and FIG. 20, the first pushing portion 511 may be connected to the first auxiliary swing arm 51 by a first connecting arm 512, and when rotating, the first auxiliary swing arm 51 drives the first pushing portion 511 through the first connecting arm 512 to rotate. For example, the first auxiliary swing arm 51 is fixedly connected to the third rotating shaft 83, and the first connecting arm 512 may be fixed to the third rotating shaft 83.

Similarly, referring to FIG. 13 and FIG. 20, the second pushing portion 521 may be connected to the second auxiliary swing arm 52 by a second connecting arm 522, and when rotating, the second auxiliary swing arm 52 drives the second pushing portion 521 through the second connecting arm 522 to rotate. For example, the second auxiliary swing arm 52 is fixedly connected to the fourth rotating shaft 84, and the second connecting arm 522 may be fixed to the fourth rotating shaft 84.

Certainly, in some other embodiments, the first pushing portion 511 may alternatively be directly connected to the first auxiliary swing arm 51, and the second pushing portion 521 may alternatively be directly connected to the second auxiliary swing arm 52.

To further improve a support effect for the foldable screen 2000, in some embodiments, referring to FIG. 6, FIG. 10, and FIG. 11, the folding assembly 100 further includes a third support member 71 and a fourth support member 72. The third support member 71 is arranged on the first main swing arm 31. The third support member 71 and the first main swing arm 31 may be separately formed and connected, or may be an integrated structure integrally formed. The third support member 71 includes a sixth support surface 710. The sixth support surface 710 is configured to support the foldable screen 2000. The fourth support member 72 is arranged on the second main swing arm 32. The fourth support member 72 and the second main swing arm 32 may be separately formed and connected, or may be an integrated structure integrally formed. The fourth support member 72 includes a seventh support surface 720. The seventh support surface 720 is configured to support the foldable screen 2000. When the folding assembly 100 is in the unfolded state, the sixth support surface 710 and the seventh support surface 720 are located between the first support surface 410 and the second support surface 420, and the sixth support surface 710, the seventh support surface 720, the first support surface 410, and the second support surface 420 may be substantially flush (a tolerance should be allowed), for example, as shown in FIG. 16. When the folding assembly 100 is in the folded state, the sixth support surface 710 is arranged opposite to the seventh support surface 720, for example, as shown in FIG. 18.

Through such arrangements, the sixth support surface 710 and the seventh support surface 720 are arranged, which helps to increase a support area for the foldable screen 2000, thereby improving flatness of the foldable screen 2000 in the unfolded state. In addition, by adding a support surface on another component different from the first support surface 410 and the second support surface 420, structural strength and support stability are higher, which can avoid that some positions of a support surface are susceptible to deformation because the support surface is increased on a same component (for example, if an area of the first support surface 410 is increased, an edge part or a middle part of the first support member 41 is susceptible to deformation when the first support member 41 is subjected to an external force, and a requirement for flatness is also increased when the area of the first support surface 410 is larger; for example, if a length of the door plate 60 is increased, the door plate 60 is susceptible to deformation under a force, and the door plate 60 has a concave-convex structure because the door plate 60 needs to avoid other components of the terminal device 10000, which affects the support effect for the foldable screen 2000).

Optionally, in some embodiments, referring to FIG. 18, when the folding assembly 100 is in the folded state, the sixth support surface 710 and the seventh support surface 720 form an angle d (the angle d is greater than 0° and less than 180°, for example, may be an acute angle, a right angle, or an obtuse angle), a distance between an edge of the sixth support surface 710 away from the first support member 41 and an edge of the seventh support surface 720 away from the second support member 42 is a third distance L3, a distance between an edge of the sixth support surface 710 close to the first support member 41 and an edge of the seventh support surface 720 close to the second support member 42 is a fourth distance L4, and the third distance L3 is greater than the fourth distance L4.

Through such arrangements, a larger space with a side away from the first support member 41 and the second support member 42 larger than a side close to the first support member 41 and the second support member 42 is formed between the sixth support surface 710 and the seventh support surface 720, to accommodate the foldable part 2100 of the foldable screen 2000, thereby further reducing a possibility of damage to the foldable part 2100 of the foldable screen 2000 due to an excessively large degree of folding deformation.

Optionally, referring to FIG. 6, in the direction of the rotation axis (that is, the Y-axis direction) along which the first main swing arm 31 is rotatably connected to the seat 10, the third support member 71 and the fourth support member 72 are located at a same position, the third support member 71 and the door plate 60 are arranged in sequence, and the fourth support member 72 and the door plate 60 are arranged in sequence, that is, the third support member 71 and the fourth support member 72 are located on a side of the door plate 60. In this way, the length of the door plate 60 along the Y-axis direction can be reduced. Alternatively, the support surface for supporting the foldable screen 2000 can be distributed to the door plate 60, the third support member 71, and the fourth support member 72, to reduce a possibility that the foldable screen 2000 is dented or wrinkled in the unfolded state, thereby improving support stability of the foldable screen 2000.

Optionally, referring to FIG. 10 and FIG. 11, the third support member 71 may be connected to the first arc-shaped arm 312 of the first main swing arm 31 by a first connecting portion, and the fourth support member 72 may be connected to the second arc-shaped arm 322 of the second main swing arm 32 by a second connecting portion.

It may be understood that there may be one or more first fixing members 21, second fixing members 22, first main swing arms 31, second main swing arms 32, first support members 41, second support members 42, first auxiliary swing arms 51, second auxiliary swing arms 52, third support members 71, and fourth support members 72.

Optionally, one first fixing member 21, one second fixing member 22, one first main swing arm 31, one second main swing arm 32, one first auxiliary swing arm 51, one second auxiliary swing arm 52, one third support member 71, and one fourth support member 72 may cooperate to form one rotation group. Along the length direction (that is, the Y-axis direction) of the seat 10, one or more rotation groups may be arranged.

For example, referring to FIG. 6 and FIG. 9, there is one seat 10, one door plate 60, one first support member 41, and one second support member 42, and there are two first fixing members 21, two second fixing members 22, two first main swing arms 31, two second main swing arms 32, two third support members 71, and two fourth support members 72, to form two rotation groups sequentially arranged along the length direction of the seat 10. The first support member 41 is rotatably connected to both the first fixing members 21 of the two rotation groups, and is slidably and rotatably connected to both the first main swing arms 31 of the two rotation groups. The second support member 42 is rotatably connected to both the second fixing members 22 of the two rotation groups, and is slidably and rotatably connected to both the second main swing arms 32 of the two rotation groups. The door plate 60 is located between two third support members 71 and is also located between two fourth support members 72. When the folding assembly 100 is in the unfolded state, the foldable part 2100 of the foldable screen 2000 may be supported on the door plate 60, the two third support members 71, and the two fourth support members 72, so that flatness of the foldable screen 2000 can be further improved.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A folding assembly, switchable between an unfolded state and a folded state, wherein
the folding assembly comprises:
a seat;
a first auxiliary swing arm and a second auxiliary swing arm, wherein the first auxiliary swing arm is rotatably connected to the seat, and the second auxiliary swing arm is rotatably connected to the seat; and
a door plate, located between the first auxiliary swing arm and the second auxiliary swing arm, wherein
a first fitting portion and a second fitting portion are arranged on the door plate, the first auxiliary swing arm is connected to a first pushing portion, and the second auxiliary swing arm is connected to a second pushing portion; when the folding assembly is switched from the unfolded state to the folded state, the first pushing portion abuts against a first part of the first fitting portion, and the second pushing portion abuts against a second part of the second fitting portion, to push the door plate to move toward the seat; and when the folding assembly is switched from the folded state to the unfolded state, the first pushing portion abuts against a third part of the first fitting portion, and the second pushing portion abuts against a fourth part of the second fitting portion, to push the door plate to move facing away from the seat, wherein the first part and the third part are arranged opposite to each other, and the second part and the fourth part are arranged opposite to each other.

2. The folding assembly according to claim 1, wherein the first fitting portion and the second fitting portion are annular structures or are structural bodies provided with holes.

3. The folding assembly according to claim 1 or 2, wherein the first fitting portion and the second fitting portion are located on a side of the door plate facing the seat.

4. The folding assembly according to any one of claims 1 to 3, wherein the first part, the second part, the third part, and the fourth part are surface structures.

5. The folding assembly according to any one of claims 1 to 4, wherein the first fitting portion is provided with a first fitting groove, to enable the first fitting portion to form an annular structure, wherein an inner wall of the first fitting groove comprises the first part and the third part; and the second fitting portion is provided with a second fitting groove, to enable the second fitting portion to form an annular structure, wherein an inner wall of the second fitting groove comprises the second part and the fourth part.

6. The folding assembly according to claim 5, wherein the first pushing portion deviates from a rotation axis of the first auxiliary swing arm, and is located in the first fitting groove; and the second pushing portion deviates from a rotation axis of the second auxiliary swing arm, and is located in the second fitting groove.

7. The folding assembly according to claim 6, wherein the first auxiliary swing arm is located on a side of the first fitting portion, projections of the first auxiliary swing arm and the first fitting portion along a direction of the rotation axis of the first auxiliary swing arm at least partially overlap, and the first pushing portion is located on a side of the first auxiliary swing arm facing the first fitting portion; and
the second auxiliary swing arm is located on a side of the second fitting portion, projections of the second auxiliary swing arm and the second fitting portion along a direction of the rotation axis of the second auxiliary swing arm at least partially overlap, and the second pushing portion is located on a side of the second auxiliary swing arm facing the second fitting portion.

8. The folding assembly according to any one of claims 1 to 7, wherein the first pushing portion and the second pushing portion are shaft structures, rod structures, or strip structures.

9. The folding assembly according to any one of claims 1 to 8, further comprising:
a first fixing member and a second fixing member, respectively located on two sides of the seat, wherein the first auxiliary swing arm is slidably connected to the first fixing member, and the second auxiliary swing arm is slidably connected to the second fixing member; and
a first main swing arm and a second main swing arm, wherein the first main swing arm is rotatably connected to the seat and the first fixing member respectively, and the second main swing arm is rotatably connected to the seat and the second fixing member respectively.

10. The folding assembly according to claim 9, wherein a rotation axis along which the first main swing arm is rotatably connected to the seat does not coincide with a rotation axis along which the first auxiliary swing arm is rotatably connected to the seat; and
a rotation axis along which the second main swing arm is rotatably connected to the seat does not coincide with a rotation axis along which the second auxiliary swing arm is rotatably connected to the seat.

11. The folding assembly according to claim 9 or 10, wherein a first arc-shaped arm is arranged on the first main swing arm, and a first arc-shaped groove is provided on the seat, or a first arc-shaped groove is provided on the first main swing arm, and a first arc-shaped arm is arranged on the seat, wherein the first arc-shaped arm slidably fits the first arc-shaped groove, to rotatably connect the first main swing arm to the seat; and
a second arc-shaped arm is arranged on the second main swing arm, and a second arc-shaped groove is provided on the seat, or a second arc-shaped groove is provided on the second main swing arm, and a second arc-shaped arm is arranged on the seat, wherein the second arc-shaped arm slidably fits the second arc-shaped groove, to rotatably connect the second main swing arm to the seat.

12. The folding assembly according to any one of claims 9 to 11, wherein the first main swing arm and the second main swing arm are staggered along a length direction of the seat.

13. The folding assembly according to any one of claims 9 to 12, wherein the first fixing member is provided with a first sliding space, wherein one end of the first auxiliary swing arm extends into the first sliding space and slidably fits the first sliding space, and a cross section of the first sliding space is elongated; and the second fixing member is provided with a second sliding space, wherein one end of the second auxiliary swing arm extends into the second sliding space and slidably fits the second sliding space, and a cross section of the second sliding space is elongated.

14. The folding assembly according to any one of claims 1 to 13, further comprising a first gear, a second gear, a third gear, and a fourth gear, wherein
the first gear is directly or indirectly fixed to the first auxiliary swing arm, and the second gear is directly or indirectly fixed to the second auxiliary swing arm; and the third gear is meshed with the fourth gear, the third gear is meshed with the first gear, and the fourth gear is meshed with the second gear; and
the first gear is in meshed transmission with the second gear through the third gear and the fourth gear, to enable the first auxiliary swing arm and the second auxiliary swing arm to rotate synchronously and in opposite rotation directions.

15. A terminal device, comprising:
the folding assembly according to any one of claims 1 to 14; and
a foldable screen, wherein a position of a foldable part of the foldable screen corresponds to a position of the folding assembly.
